(19) Europäisches Patentamt
European Patent Office
Office européen des brevets

(11) EP 3 100 042 B1

(12) EUROPEAN PATENT SPECIFICATION

(45) Date of publication and mention
of the grant of the patent:
31.12.2025 Bulletin 2026/01

(21) Application number: 15701965.4

(22) Date of filing: 28.01.2015

(51) International Patent Classification (IPC):
G01N 29/30 (2006.01)    G01N 29/44 (2006.01)

(52) Cooperative Patent Classification (CPC):
G01N 29/4463; G01N 29/30; G01N 2291/044

(86) International application number:
PCT/EP2015/051721

(87) International publication number:
WO 2015/114013 (06.08.2015 Gazette 2015/31)

(54) **DEVICE AND METHOD FOR THE NON-DESTRUCTIVE TESTING OF A TEST OBJECT BY MEANS OF UNLTRASOUND IN ACCORDANCE WITH THE DGS METHOD**

VORRICHTUNG UND VERFAHREN ZUR ZERSTÖRUNGSFREIEN PRÜFUNG EINES PRÜFLINGS MITTELS ULTRASCHALL GEMÄSS DGS- VERFAHREN

DISPOSITIF ET PROCÉDÉ POUR L'ESSAI NON DESTRUCTIF D'UN OBJET D'ESSAI À L'AIDE D'ULTRASONS SELON LE PROCÉDÉ DGS

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 31.01.2014 DE 102014101227

(43) Date of publication of application:
07.12.2016 Bulletin 2016/49

(73) Proprietor: Baker Hughes Digital Solutions GmbH
50354 Hürth (DE)

(72) Inventor: KLEINERT, Wolf
DE 50354 Huerth (DE)

(74) Representative: Novagraaf Group
Chemin de l'Echo 3
1213 Onex / Geneva (CH)

(56) References cited:
US-A- 4 462 082          US-A- 5 511 425
US-A1- 2011 016 979      US-A1- 2013 291 640

• CERTO M ET AL: "DGS curve evaluation applied
to ultrasonic phased array testing", INSIGHT
(NON-DESTRUCTIVE TESTING AND CONDITION
MONITORING), BRITISH INSTITUTE OF NON-
DESTR. TEST., NORTHAMPTON, GB, vol. 52, no.
4, 1 April 2010 (2010-04-01), pages 192 - 194,
XP008146357, ISSN: 1354-2575, DOI: 10.1784/
INSI.2010.52.4.192

## Description

The subject matter of the present invention is a device and a method for the non-destructive testing of a test object by means of ultrasound, the device, or the method, being configured for characterizing flaws or discontinuities in the material of a test object in accordance with the DGS method. In particular, the device, or the method, is provided for characterizing a flaw or a discontinuity in the test object material that are located within the near field of an ultrasonic transducer used for generating the ultrasound.

US 2013/0291640 A1 discloses an ultrasonic inspection system to scan for discontinuities in thick solid objects. Discontinuity size and position is correlated with an equivalent reflector size by the DGS method. US 5 511 425 A discloses a flaw detector incorporating DGS. US 2011/016979 A1 discloses non destructive testing. CERTO et al: "DGS curve evaluation applied to ultrasonic phased array testing", (NON-DESTRUCTIVE TESTING AND CONDITION MONITORING), BRITISH INSTITUTE OF NON-DESTR. TEST., NORTHAMPTON, gb, vol.52, no. 4, 1 April 2010, pages 192-194 discloses a phased array for ultrasonic testing of an object by applying DGS curve evaluation; in order to avoid the overestimation of a defect detected in the near-field region, said region is re-examined using fewer active elements in order to reposition the defect in the far-field of the inspection probe.

The so-called DGS method (DGS = distance, gain, size) was developed in Europe in the late fifties of the 20th century. It is a method for the quantitative assessment of flaws or discontinuities in the material of a test object and is based on a comparison of the echo indication stemming from a flaw or a discontinuity with the amplitude of a reference reflector irradiated with sound in a defined manner. In practical use, a circular disk reflector is used which is perpendicularly irradiated with sound. Within the context of the DGS method, a detected flaw or a detected discontinuity is thus quantitatively characterized by means of a comparison with the size of a circular disk reflector that supplies a flaw indication with an equivalent echo amplitude. The size of such a circular disk reflector is referred to as the "equivalent reflector size" (ERS) of the flaw / discontinuity to be characterized. Theoretically, other reference reflectors, e.g. cross bores, can be used in the work. However, this is unusual.

Even if the flaw sizes / ERS values determined by means of the DGS method are comparable only under strict conditions with the actual flaw size or the size of a discontinuity, as it can be determined by destructive testing, for example, it was nevertheless introduced into a variety of testing standards, such as the European testing standard EN 583-2:2001.

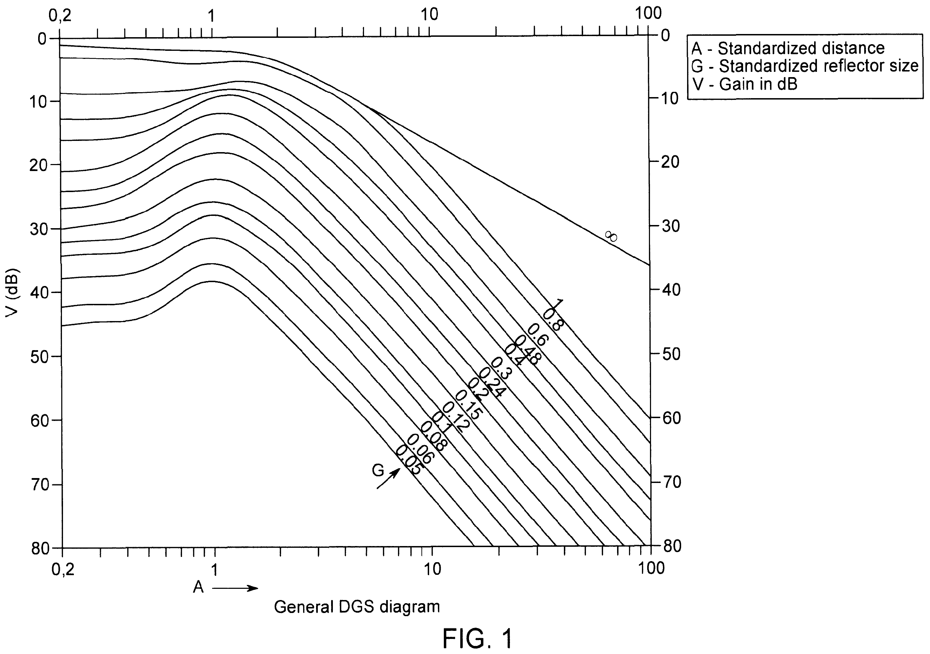

If one considers the sound field generated by a, for example, circular plane ultrasonic transducer, one finds that a plurality of consecutive maxima of the sound pressure form along the acoustic axis adjacent to the ultrasonic transducer surface. The distance of the last sound pressure maximum on the acoustic axis from the ultrasonic transducer is referred to as the near-field length N, the sound field between the ultrasonic transducer and the near-field length is referred to as the near field, and the adjacent sound field as the far field. In the context of theoretical considerations and practical tests, it was found that the echo amplitude in the far field of a circular disk reflector irradiated with sound perpendicularly characteristically decreases with a rising distance between the ultrasonic transducer and the circular disk reflector. If, for a given, for example circular, ultrasonic transducer with a given transducer diameter and transmission frequency, the curve of the echo amplitude of the respective gain factor f, which is required to bring the echo indication of the circular disk reflector to the level of a reference echo, is plotted for a plurality of circular disk reflectors of different diameters as a function of the distance between the circular disk reflector and the ultrasonic transducer, a host of curves is obtained which is referred to as DGS diagrams. Such a DGS diagram, which has been taken from DEN 583:2-2001, is shown in Figure 1 by way of example. In practice, it was found that experimentally determined echo amplitudes on circular disk reflectors follow the theoretically predicted curves with good accuracy in the DGS diagram, provided the distance between the ultrasonic transducer and the circular disk reflector is at least 70% of the near-field length N of the ultrasonic transducer used for ultrasound generation. Consequently, the above-mentioned European testing standard EN 583-2:2001 also prescribes that in the context of the DGS method, the aforementioned condition is mandatorily required to be observed. In practice, this means that it is obligatory that test probes with a small near-field length must be used for testing near-surface regions. However, this constitutes a limitation with regard to the transmission frequency of the test probe used or of the dimensions of the ultrasonic transducer used in the test probe for ultrasound generation. Depending on the testing task to be solved, they can be disadvantageous because, for example, different ultrasound frequencies experience different levels of sound attenuation in the material of the test object to be inspected. Moreover, the geometric dimensions of the ultrasonic transducer used for ultrasound generation determine both the divergence of the sound field generated and the maximum obtainable sound pressures.

As a result, a plurality of different ultrasonic test probes with different transmission frequencies and transducer dimensions generally have to be kept in store for a comprehensive ultrasonic testing of a test object.

It is therefore the object of the invention to propose a device and a method that avoid the aforementioned drawbacks. In particular, the device, or the method, is supposed to be suitable for the non-destructive testing of a test object by means of ultrasound, the device being configured for characterizing flaws or discontinuities in the material of the test object in accordance with the DGS method, which are located in the near field of an ultrasonic transducer used for generating the ultrasound.

This object is achieved by a device according to claim 1 and by a method according to claim 8. The subclaims following the independent claims constitute advantageous developments of the invention.

A device according to the invention comprises an ultrasonic test probe with an ultrasonic transducer for generating and coupling an ultrasonic field into the test object and, if necessary, for recording resulting echo signals from the test object. Preferably, the technique used is the pulse echo technique, i.e. the echo signals are recorded at the coupling location. In this technique, one and the same test probe is generally used both for generating and coupling the ultrasonic pulses into the test object as well as for recording the echo signals, i.e. of the ultrasonic pulses reflected in the test object. In principle, however, transsonification can also be used in the operation, i.e. separate test probes are used for generating and coupling the ultrasonic pulses into the test object as well as for recording the echo signals, i.e. the signals that have passed through the test object and were reflected in the process on a flaw or discontinuity. In that case, the device would comprise a second ultrasound-receiving test probe configured in a manner comparable to the first ultrasound transmitting test probe and adapted to receive the echo signals from the test object.

Furthermore, the device comprises a control unit for controlling the ultrasound transmitting test probe in such a way that the latter generates ultrasonic pulses with a certain bandwidth B. Furthermore, the device comprises a receiving unit for recording echo signals by means of the ultrasonic test probe from the test object, wherein in this case, if necessary, a receiving test probe with preferably identical ultrasonic properties can be used, which is formed separate from the transmitting test probe. Finally, the device comprises an evaluation unit connected to the receiving unit. The evaluation unit is configured for processing the echo signals from the test object recorded by the receiving unit.

According to the invention, the evaluation unit is now configured to determine, from echo signals recorded from the test object and caused by flaws or discontinuities in the test object material, an equivalent reflector size ERS of the echo-generating flaw or the echo-generating discontinuity in accordance with the DGS method. In this case, the basis of the determination of the equivalent reflector size is a DGS diagram that depends on the bandwidth B of the insonified ultrasonic pulses.

The bandwidth-dependent DGS diagram to be used according to the invention, which includes the course of the echo amplitude of a circular disk reflector or of an equivalent size as a function of the distance between the ultrasonic transducer and the circular disk reflector for a plurality of circular disk reflectors of different diameters, can in this case both be experimentally determined prior to the measurement, as well as be based on theoretical considerations. In particular, a method will be outlined below with which the course of the echo amplitude of an equivalent size of a circular disk reflector can be calculated as a function of the distance between the reflector and the transducer. Within the context of the present invention, "DGS diagram" is supposed to denote both the above-mentioned host of curves, which includes a plurality of curves for the echo amplitudes or an equivalent size of circular disk reflectors of different diameters as a function of their distance from the transmitting transducer, and a suitable mathematical representation of such a host of curves, for example in the form of an analytic function that comprises the diameter of the circular disk reflector as a parameter. Such a mathematical representation may also consist of a table into which the results of a numerical calculation of the course of the echo amplitude as a function of the distance between the transmitting transducer and the circular disk reflector have been entered for a plurality of different reflector diameters.

In a particularly preferred embodiment of the device according to the invention, the device according to the invention, and thus generally the entirety consisting of the ultrasonic test probe and the control unit, is configured to generate a sound field that is rotationally symmetric in the test object. Corresponding, in particular obliquely insonifying, ultrasonic test probes are known from WO 2010/130819 A1 by the applicant. From this application, in particular, the manner is apparent in which manner a single-part transmitting transducer of an obliquely insonifying ultrasonic test probe has to be designed in order to generate a sound field that is rotationally symmetric in the test object. For most testing tasks using the pulse echo technique, an oblique insonification is desirable or even required. Within the context of the present invention, a sound field that is rotationally symmetric in the test object permits a simplified calculation of the material-specific or transmitting transducer-specific DGS diagram. It is also clear from WO 2010/130819 A1 that it is possible to generate a sound field that is rotationally symmetric in the test object also by means of phased array technique. For this purpose, selected transducers of a two-dimensional plane array, for example, are controlled by individually controllable transducer in a phase-accurate manner. In that case, the control unit is to be configured to be suitable for this purpose. Both options mentioned herein for generating a sound field that is rotationally symmetric in the test object are part of the subject matter of the present invention.

Within the context of intensive theoretical analyses and practical tests, it was also found that the use of pulsed sound results in differences in the DGS diagram depending on the polarization of the ultrasonic pulse in the test object. In a preferred embodiment, the DGS diagram provided in the device according to the invention takes into account the polarization of the testing pulses in the test object material. However, it was also found that in many cases of practical application, the differences in the DGS diagrams for the different polarization directions are so slight that they practically cannot be resolved any more experimentally. Therefore, in a simplified embodiment, a uniform DGS diagram can be used for both polarization directions.

In another preferred embodiment, the control unit of the device according to the invention is configured, in order to determine the equivalent reflector size of a detected flaw or detected discontinuity, to carry out a method during which the echo amplitude of a reference reflector is recorded on a test body. In the process, the reference reflector is situated at the distance $d_{ref}$ from the test probe. As a rule, the back-face echo of a test body with a circular-arc shaped back face is used (so-called test body No. 1). In that case, the so-called amplitude correction, which allows for the fact that the reflecting surface is not plane, but curved, and thus has a focusing or defocusing effect, has to be taken into account in the determination of the echo height of the back-face echo. However, it is also conceivable that alternative reference reflectors are used, e.g. the bottom of a circular bore. Using the echo amplitude thus determined, the theoretical DGS curve specific to the reference reflector, that is, usually the back-face echo curve, can be shifted in the DGS diagram in the y-direction in such a way that the detected reference echo comes to lie on the shifted DGS curve.

In order to determine the ERS value of a detected flaw or a detected discontinuity situated at a certain distance $d_{Fehler}$ from the test probe, the gain factor $G_{ref}$ is determined which must be adjusted in order to adjust the echo amplitude of the reference echo to a certain value, typically 80%, of the maximum indication height.

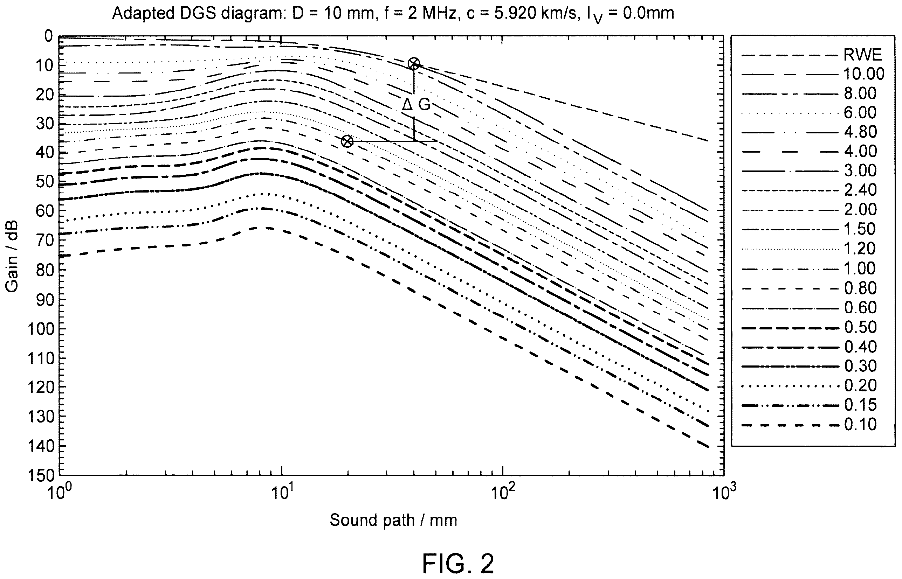

In the next step, the gain factor $G_{Fehler}$ is determined, which is required to adjust the echo amplitude of the flaw to the same value as the reference echo, that is, e.g. 80% of the indication height. Then, the difference $\Delta G$ of the two gain values is plotted into the DGS diagram, at the position of the reference echo $d_{ref}$, in the y-direction downwards, that is, $\Delta G = G_{Fehler} - G_{ref}$. In the next step, the difference $\Delta d$ of the distances $d_{ref}$ and $d_{Fehler}$ is plotted towards the left in the x-direction, i.e. $\Delta d = d_{ref} - d_{Fehler}$. Then, the resulting end point lies on the DGS curve of the circular disk reflector that would generate an echo signal of the same height. This method is schematically illustrated in Fig. 2.

By identifying the DGS curve characterized by the diameter D of the circular disk reflector, on which the end point as described above comes to lie, the ERS value of the detected flaw is then determined. On the one hand, this may take place by selecting the DGS curve stored in the evaluation unit that has the smallest deviation in the y-direction from the determined end point. However, this may also take place by a suitable interpolation between the DGS curves stored in the evaluation unit. If the general DGS curve for the selected type of reference reflector is provided in the evaluation unit in the form of a function that depends on the characteristic size of the selected reference reflector, e.g. on the diameter D of a circular disk reflector, the characteristic size of the reference reflector can be determined with this by calculation.

Within the context of the present invention, this functionality can advantageously be applied to the automatic determination of the equivalent reflector size ERS of a flaw or discontinuity located in the near field of the test probe used for the ultrasound inspection. The automatic determination of the parameter P results in an increased reproducibility and objectivity of the test result.

It was also found in the context of the theoretical or practical testing of the present invention that the DGS diagram of a given transmitting transducer in a given material not only takes a particularly simple form if the sound field coupled into the test object by the transmitting transducer is rotationally symmetric in the test object, but if, in addition, the condition is satisfied that the dimensions of the ultrasonic transmitting transducer are large compared with the diameter of a circular disk reflector whose distance-dependent echo signal is to be calculated. As can be gathered from WO 2010/130819 A1 by the applicant, a rotationally symmetric sound field can be generated in the test object in the case of an oblique insonification if the transmitting transducer has an approximately elliptic shape. In the context of the present invention, the diameter D of the transmitting transducer can in such a case be assumed to be the diameter of a circular transmitting transducer of the same surface area.

This assumption has been found in practice to be sustainable, which is presumably due to the fact that the sound power of ultrasonic transducers with a different shape, but otherwise identical surface area, is identical. The theoretically calculated echo signal has deviates slightly from experimentally determined values, in particular in the case in which the thus defined "diameter" of the elliptical transmitting transducer is at least twice as large as the diameter of the circular disk reflector under consideration. Depending on the correct geometry and the transmission frequency of the transmitting transducer used, a more restrictive criterion can also be required, for example, that the characteristic dimensions of the transmitting transducer have to be four times or, particularly preferably, eight times as large as the diameter of the circular disk reflector under consideration.

In another preferred embodiment of the present invention, the device according to the invention is configured in such a way that the included evaluation unit is configured to generate an indication for a human operator if the ratio between the equivalent reflector size ERS determined from a flaw indication in a suitable manner, for example within the context of a fitting routine, to typical dimensions of the transmitting transducer used exceeds a preset threshold.

The method according to the invention is based on the non-destructive testing of a test object by means of ultrasound. It serves for characterizing such flaws or discontinuities in the material of the test object by means of the DGS method which are located in the near field of an ultrasonic transducer used for generating the ultrasound. In this case, the method comprises the following method steps:

coupling ultrasonic pulses with a certain bandwidth B into the test object,

recording echo signals from the test object which are correlated with a flaw or discontinuity,

determining an equivalent reflector size ERS of a flaw or discontinuity causing the recorded echo signals from received echo signals based on a DGS diagram, which was determined taking into consideration the bandwidth B of the insonified ultrasonic pulses.

Preferably, the technique used is the pulse echo technique, i.e. the echo signals are recorded at the coupling location. In this technique, one and the same test probe is generally used both for generating and coupling the ultrasonic pulses into the test object as well as for recording the echo signals, i.e. of the ultrasonic pulses reflected in the test object. In principle, however, transsonification can also be used in the operation, i.e. separate test probes are used for generating and coupling the ultrasonic pulses into the test object as well as for recording the echo signals, i.e. the signals that have passed through the test object and were reflected in the process on a flaw or discontinuity.

The present invention for the first time makes it possible to characterize flaws by means of the DGS method which are located in the near field of the transmitting transducer used. This simplifies the application of the DGS method considerably, because the number of ultrasonic test probes required for a testing task is significantly reduced. If the DGS method is used in accordance with the prior art, reproducible results can only be obtained in the far field of the transmitting transducer. If an echo indication suggests that the flaw / discontinuity is located within the near field of the transmitting transducer, then one has to switch to a test probe with a transmitting transducer having a shorter near-field length. On the one hand, this increases the technical expenditure but also extends the testing time. Furthermore, a change of test probe inevitably also constitutes a source of testing inaccuracies.

In a preferred embodiment of the method, the ultrasonic pulses generate a sound field that is rotationally symmetric in the test object. This is advantageous particularly if the ultrasonic pulses used for testing are insonified obliquely into the test object, which is advantageous or even an absolute requirement for many testing tasks. It should be noted that both the ultrasonic test probe used for transmitting and the ultrasonic test probe used for receiving may comprise only a single ultrasonic transducer that generally determines the properties of the ultrasonic field generated / recorded by the test probe, i.e. propagation direction, diameter and opening angle or beam shape. However, it is also possible to generate an ultrasonic field by means of a transmitting test probe or to record it by means of a receiving test probe that comprises a plurality of ultrasonic transducers that can be individually controlled in a phase-accurate manner, e.g. in the form of a segmented, large-surface ultrasonic transducer. Through the phase-accurate control of the individual ultrasonic transducers, such a "phased array" permits a far-ranging beam control, i.e. a specific setting of the orientation of the propagation direction, diameter and opening angle or the beam shape in general of the generated or recorded ultrasonic field. This technique, which is also known as "phased array" technique, can be used advantageously within the context of the present invention.

In a preferred embodiment of the method according to the invention, the DGS diagram is determined taking into account the polarization P (longitudinal vs. transversal) of the insonified ultrasonic pulses. This results in another increase of the accuracy or reproducibility of the flaw size determination by means of the device according to the invention or the method according to the invention.

The reproducibility of the flaw size determination can also be improved by using, in the context of the method, a DGS diagram in the form of a function containing the diameter DKSR of a circular disk reflector as a parameter p. In order to determine the equivalent reflector size ERS of a detected flaw/discontinuity, the above-described method is carried out.

It should be noted that the device according to the invention and the method according to the invention are, in particular, suitable for characterizing flaws or discontinuities in the material of the test object in accordance with the DGS method, which are located in the near field of an ultrasonic transducer used for generating the ultrasound. However, the device and method are also suitable for characterizing flaws or discontinuities in the material of the test object in accordance with the DGS method, which satisfy the distance criterion of the European testing standard EN 583-2:2001 cited in the introduction.

This also applies to the features of the following exemplary embodiment, from which further features and advantages of the device according to the invention and the method according to the invention become apparent. The exemplary embodiment serves for illustrating the invention to a person skilled in the art and is therefore to be understood as an example, and not to be limiting. It refers to the Figures, which show the following:

Fig. 1: a DGS diagram for continuous sound according to the prior art (taken from EN 583:2-2001),

Fig. 2: an exemplary DGS diagram for illustrating the method for determining the equivalent reflector size of a flaw,

Fig. 3: an exemplary embodiment of a device according to the invention,

Fig. 4: the geometry of the sound field at the end of the near field,

Fig. 5: the ultrasonic pulse, used with an envelope,

Fig. 6: the spectrum of the ultrasonic pulse used,

Fig. 7: a graphical representation of a plurality of test measurements to which a DGS diagram according to the prior art was adapted, and

Fig. 8: a graphical representation of the plurality of test measurements from Fig. 7 to which a bandwidth-dependent DGS diagram according to the present invention was adapted.

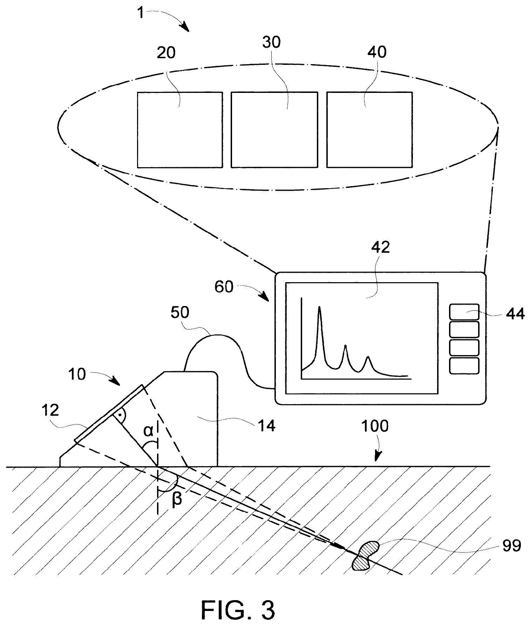

Figure 3 shows an exemplary embodiment of a testing device 1 according to the invention for the non-destructive testing of a test object 100 by means of ultrasound. The testing device 1 is configured for characterizing flaws or discontinuities 99 in the material of the test object 100 in accordance with the DGS method, which can be located, in particular, in the near field of an ultrasonic transducer 14 used for generating the ultrasound. The testing device 1 comprises an ultrasonic test probe 10 with a single-part ultrasonic transducer 12 for generating and coupling an ultrasonic field into the test object 100 and for recording resulting echo signals from the test object 100. The test probe 10 is configured for an oblique insonification into the test object 100. To this end, the ultrasonic transducer 12 is disposed on a wedge-shaped leading body 14.

Furthermore, the testing device 1 comprises a control unit 20 for controlling the ultrasonic test probe 10, so that the latter generates a sequence of ultrasonic pulses with a certain transmission frequency f, which is typically between 1 and 5 MHz and within a bandwidth typically between 20 and 40%. The pulse sequence frequency typically lies in the range of a few kHz. The control unit 20 is connected to the test probe 10 and in particular to the ultrasonic transducer 12 thereof.

Furthermore, a receiving unit 30 is provided for recording echo signals by means of the ultrasonic test probe 10. The receiving unit 30 is also connected to the test probe 10 and in particular to the ultrasonic transducer 12 thereof.

Finally, an evaluation unit 40 connected both to the control unit 20 and to the receiving unit 30 is provided, which is configured for processing the echo signals from the material of the test object 100 recorded by the ultrasonic transducer 12 of the test probe 10. The evaluation unit 40 is connected to a display device 42 in the form of an LCD or an OLED, on which the amplitude of the received echo signals, for example, can be displayed in a time-resolved manner (A scan). A representation of the gain factor f, which is required to bring the maximum echo signal of a flaw/discontinuity 100 to the echo height of a reference reflector (e.g. back-face echo) spaced equally distant from the transmitting transducer, is equivalent to the representation of the echo amplitude. A DGS diagram taken from EN 583:2-2001 is shown in Fig. 1 by way of example.

In order to determine the equivalent reflector size of a detected flaw or detected discontinuity, the device 1 is configured to carry out a method during which the echo amplitude of a reference reflector is recorded on a test body. In the process, the reference reflector is situated at the distance $d_{ref}$ from the test probe. As a rule, the back-face echo of a test body with a circular-arc shaped back face is used (so-called test body No. 1).

In order to determine the ERS value of a detected flaw or a detected discontinuity situated at a certain distance $d_{Fehler}$ from the test probe, the gain factor $G_{ref}$ is determined which must be adjusted in order to adjust the echo amplitude of the reference echo to a certain value, typically 80%, of the maximum indication height.

In the next step, the gain factor $G_{Fehler}$ is determined, which is required to adjust the echo amplitude of the flaw to the same value as the reference echo, that is, e.g. 80% of the indication height. Then, the difference $\Delta G$ of the two gain values is plotted into the DGS diagram, at the position of the reference echo $d_{ref}$, in the y-direction downwards, that is, $\Delta G = G_{Fehler} - G_{ref}$. In the next step, the difference $\Delta d$ of the distances $d_{ref}$ and $d_{Fehler}$ is plotted towards the left in the x-direction, i.e. $\Delta d = d_{ref} - d_{Fehler}$. Then, the resulting end point lies on the DGS curve of the circular disk reflector that would generate an echo signal of the same height. This method is schematically illustrated in Fig. 2.

By identifying the DGS curve characterized by the diameter D of the circular disk reflector, on which the end point as described above comes to lie, the ERS value of the detected flaw is then determined. On the one hand, this may take place by selecting the DGS curve stored in the evaluation unit that has the smallest deviation in the y-direction from the determined end point. However, this may also take place by a suitable interpolation between the DGS curves stored in the evaluation unit. If the general DGS curve for the selected type of reference reflector is provided in the evaluation unit in the form of a function that depends on the characteristic size of the selected reference reflector, e.g. on the diameter D of a circular disk reflector, the characteristic size of the reference reflector can be determined with this by calculation. In this case, the device can be implemented in the control unit 20, the evaluation unit 40 or even in a higher-level control unit which is part of the device 1.

The control unit 20, the receiving unit 30 as well as the evaluation unit 40 including the display device 42 are accommodated in a common ultrasound control device 50, which is connected via a communication line 60 to the test probe 10.

In an alternative embodiment, the control unit 20, the receiving unit 30 and the evaluation unit 40 can be integrated separately or jointly and partially or completely into the test probe 10.

The ultrasonic test probe 10 is configured according to WO 2010/130819 A1, so that it generates a sound field that is rotationally symmetric to the acoustic axis in the test object 100. For this purpose, an only approximately circular and non-planar ultrasonic transducer is generally required, whose "diameter" is hereinafter designated D. A size was already specified in the introductory part which, within the context of the invention, can be considered equivalent to the "diameter" D of such an only approximately circular ultrasonic transducer 12. Reference is made thereto.

The evaluation unit 40 is configured for determining an equivalent reflector size ERS of the flaw or discontinuity 99 from received echo signals based on a DGS diagram determined theoretically or experimentally taking into consideration the bandwidth B of the insonified ultrasonic pulses and the geometric dimensions of the substantially circular ultrasonic transducer 12. For this purpose, the DGS diagram is stored in the evaluation unit 40 as an analytic function F containing the diameter $D_{KSR}$ of a circular disk reflector as a parameter p. Alternatively, the function F can also be stored in a numerical form for a plurality of different parameters p.

In order to provide the user of the device with a numerical value for the equivalent reflector size ERS of the detected flaw/discontinuity 99 which reproducibly characterizes the flaw/discontinuity 99, the evaluation unit 40 is configured to determine, from the determined gain factor for an indication height of, for example, 80%, the parameter p, i.e. the diameter D of an equivalent circular disk reflector, by calculation from the function F. This diameter constitutes the equivalent reflector size of the flaw/discontinuity 99 according to the DGS method. As a result, the user obtains from this adaptation a reproducible value for the equivalent reflector size ERS of the detected flaw/discontinuity 99, which can be entered into a record.

Furthermore, the evaluation unit 40 is configured to generate an indication for a human operator in the form of an acoustic alarm signal and a visual error indication in the form of a color-coded message display panel 42, if the ratio of the "diameter" D defined above to the equivalent reflector size ERS determined from a flaw indication drops below a predetermined threshold.

The value 1/2 has proved to be a suitable maximum threshold. A higher measuring accuracy or an improved reproducibility are obtained if the threshold is selected to be lower, e.g. 1/4 or even 1/8. If the evaluation unit 40 generates such an indication, the measured ERS value should be ignored by the operator. Alternatively, the evaluation unit 40 is configured in such a way that such an ERS value is automatically discarded.

A possible approach for theoretically determining the sound pressure on the acoustic axis for pulsed sound is based on considerations regarding the sound pressure of a circular transmitting transducer with the diameter D for continuous sound. The sound pressure $p_A(z,t)$ at the distance z from the transducer at the time t is in this case calculated using the following formula:

$$p_A(z,t) = \omega Z \int_S \frac{1}{r} \cos(\omega t - kr)\, dS$$

(1)

wherein:

$\omega$: angular frequency
Z: acoustic impedance
k: wave number
S: surface area of the circular transducer
and

$$r = \sqrt{z^2 + a^2} \ \text{ und } \ k = \frac{2\pi}{\lambda}$$

$$dS \approx a\, da\, d\varphi$$

(2 & 3)

It thus follows:

$$p_A(z,t) = 2\omega Z \int_{a=0}^{\frac{D}{2}} \int_{\varphi=0}^{2\pi} \frac{a}{\sqrt{a^2+z^2}} \cos\left(\omega t - k\sqrt{a^2+z^2}\right) \, da \, d\varphi$$

(4)

First, the integration over φ is carried out:

$$p_A(z,t) = 4\pi\omega Z \int_{a=0}^{\frac{D}{2}} \frac{a}{\sqrt{a^2+z^2}} \cos\left(\omega t - k\sqrt{a^2+z^2}\right) \, da$$

(5)

This integral equation can be solved algebraically:

$$p_A(z,t) = -2\pi cZ \left\{ \sin\left(\omega t - k\sqrt{\left(\frac{D}{2}\right)^2+z^2}\right) - \sin\left(\omega t - kz\right) \right\}$$

(6)

with the sound velocity c.
Using the trigonometric addition theorems, this term can be simplified:

$$\sin x - \sin y = 2\cos\frac{x+y}{2}\ \sin\frac{x-y}{2}$$

$$p_A(z,t) = -4\pi cZ \cos\frac{2\omega t - k\sqrt{\left(\frac{D}{2}\right)^2+z^2} - kz}{2}\ \sin k\frac{\sqrt{\left(\frac{D}{2}\right)^2+z^2} - z}{2}$$

$$= -4\pi cZ \cos\frac{2\omega t - k\sqrt{\left(\frac{D}{2}\right)^2+z^2} - kz}{2}\ \sin\frac{\pi}{\lambda}\left(\sqrt{\left(\frac{D}{2}\right)^2+z^2} - z\right)$$

(7 & 8)

Only the time-independent extremes $p_{max}(z)$ of the sound pressure $p_A(z,t)$ are of interest here. Therefore, only the extreme values are used for the cosine term and the absolute value of the sine term is considered:

$$p_{max}(z) = 4\pi cZ \left| \sin\frac{\pi}{\lambda}\left(\sqrt{\left(\frac{D}{2}\right)^2+z^2} - z\right) \right|$$

(9)

The distance from the transducer to the last sound pressure maximum on the acoustic axis is referred to as near-field length N. The extremes can be derived from the argument of the sine term in equation (9). Generally, the sine function has its extremes at:

$$\frac{2n+1}{2}\,\pi \ \text{mit} \ n \in \mathbb{N}_0$$

$$(10)$$

Therefore, the following term has to be examined:

$$\frac{\pi}{\lambda}\left(\sqrt{\left(\frac{D}{2}\right)^2 + z^2} - z\right) = \frac{2n+1}{2}\,\pi \ \text{mit} \ n \in \mathbb{N}_0$$

$$\Rightarrow 2\sqrt{\left(\frac{D}{2}\right)^2 + z^2} = (2n+1)\lambda + 2z$$

$$(11)$$

Squaring the equation and solving it for z yields:

$$z = \frac{D^2 - (2n+1)^2\,\lambda^2}{4\,(2n+1)\,\lambda}$$

$$(12)$$

Thus, z is at a maximum when the term behind the minus sign in the numerator and the denominator are as small as possible, i.e. for n=0. Thus, $z_{max} = N$ applies.

$$N = \frac{D^2 - \lambda^2}{4\,\lambda}$$

$$(13)$$

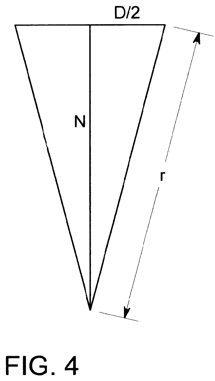

The following correlation can be derived from Figure 4:
Application of the Pythagorean theorem to the right-angled triangle formed of half the transducer diameter D/2, the near-field length N and the marginal ray r in order to calculate the length of the marginal ray r up to the end of the near field yields:

$$r^2 = N^2 + \left(\frac{D}{2}\right)^2$$

$$\Rightarrow r^2 = \left(\frac{D^2 - \lambda^2}{4\lambda}\right)^2 + \left(\frac{D}{2}\right)^2$$

$$\Rightarrow r^2 = \frac{(D^2 + \lambda^2)^2}{16\,\lambda^2}$$

$$\Rightarrow r = \frac{D^2 + \lambda^2}{4\,\lambda}$$

$$\Rightarrow r = \frac{D^2 - \lambda^2}{4\,\lambda} + \frac{\lambda}{2}$$

$$\Rightarrow r = N + \frac{\lambda}{2}$$

$$(14)$$

That means that the difference of travel between the central ray and the marginal ray at the end of the near field is exactly $\lambda/2$ in the case of continuous sound. Due to the fact that usually, $D \gg \lambda$, the following approximation for the near-field length N is frequently used in practice instead of equation (13):

$$N \approx \frac{D^2}{4\,\lambda}$$

$$(15)$$

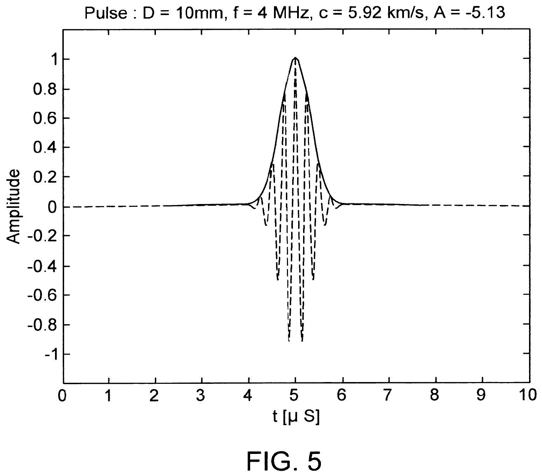

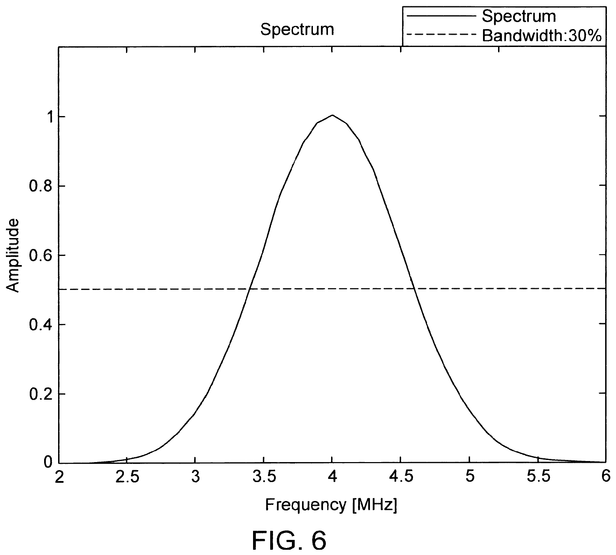

For an exemplary calculation for pulsed sound, a Gaussian curve with a central frequency of 4 MHz, as shown in Fig. 5, is selected as an envelope for the cosine function. The approximation by a Gaussian curve is justified in most cases in practice; the central frequency is selected to be typical. The pulse used is shown in Figure 6 and has a bandwidth of 30%, which is selected by way of example.

With this pulse, the sound pressure on the acoustic axis is calculated with the following exemplary, but typical values.

c = 5.92 km/s (sound velocity in the test object)

D = 20 mm (transducer diameter)

f = 4 MHz (central frequency of the ultrasonic pulse)

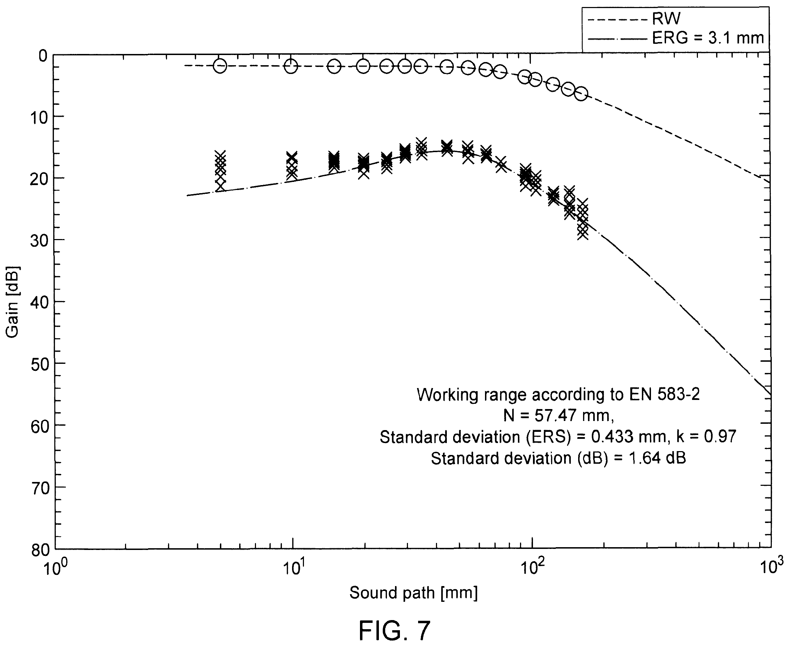

The result of the calculation is shown in Figure 7. The maximum of this sound pressure curve is at 85.4 mm. If, however, the near-field length is calculated using formula (13), the result is 67.2 mm. The result of a calculation using the simplified formula (15) is 67.6 mm. Obviously, the near-field length depends on the bandwidth of the pulse used, as can also be seen from Table 1, in which the dependency of the near-field length on the bandwidth of the ultrasonic pulse is listed for constant transducer dimensions D and the central frequency f.

Table 1: Near-field length as a function of the bandwidth

| Bandwidth | Near-field length |
| --- | --- |
| 20 % | 78.1 mm |
| 30 % | 85.4 mm |
| 40 % | 91.7 mm |
| 50 % | 97.2 mm |

For calculating the sound pressure on the acoustic axis for pulsed sound, the integral (5) that applies for continuous sound was modified as follows:

$$p_A(z,t) = 4\pi\omega Z \int_{a=0}^{\frac{D}{2}} e^{A\left(z-\sqrt{z^2+a^2}\right)^2} \frac{a}{\sqrt{a^2+z^2}} \cos\left(\omega t - k\sqrt{a^2+z^2}\right) da \tag{16}$$

The selected Gaussian curve moves together with the sound. Thus, a model of the pulse can be generated. This equation can only be solved numerically. The factor A is used to set the bandwidth. Again, the trigonometric addition theorems are used for solving the integral. Thus, the above integral can be divided into two integrals:

$$p_A(z,t) = 4\pi\omega Z \cos(\omega t) \underbrace{\int_{a=0}^{\frac{D}{2}} e^{A\left(z-\sqrt{z^2+a^2}\right)^2} \frac{a}{\sqrt{a^2+z^2}} \cos\left(k\sqrt{a^2+z^2}\right) da}_{x_1}$$

$$+ 4\pi\omega Z \sin(\omega t) \underbrace{\int_{a=0}^{\frac{D}{2}} e^{A\left(z-\sqrt{z^2+a^2}\right)^2} \frac{a}{\sqrt{a^2+z^2}} \sin\left(k\sqrt{a^2+z^2}\right) da}_{x_2} \tag{17}$$

This yields, as a solution of p(z,t), a term of the form:

$$F = x_1 \cos(\omega t) + x_2 \sin(\omega t) \tag{18}$$

The values of B and $\varphi$ can be determined from the following equation:

$$x_1 \cos(\omega t) + x_2 \sin(\omega t) = B \sin(\omega t + \varphi)$$
$$\Rightarrow x_1 \cos(\omega t) + x_2 \sin(\omega t) = B \sin(\omega t) \cos(\varphi) + B \cos(\omega t) \sin(\varphi) \tag{19}$$

By comparison, it follows from the last equation:

$$x_1 = B \sin(\varphi)$$
$$x_2 = B \cos(\varphi) \tag{20}$$

Therefore, the following continues to apply:

$$\frac{1}{x_1^2}\sin^2\varphi = \frac{1}{x_2^2}\left(1-\sin^2\varphi\right)$$

$$\sin^2\varphi = \frac{x_1^2}{x_1^2+x_2^2}$$

$$\sin\varphi = \pm\frac{x_1}{\sqrt{x_1^2+x_2^2}}$$

$$B(z) = \pm\sqrt{x_1^2+x_2^2}$$

$$(21)$$

Thus, the sound pressure $p_A$ on the acoustic axis can be given, for any depth and for any point in time t, as:

$$p_A(z,t) = B(z)\sin(\omega t + \varphi)$$

$$(22)$$

Since only the maximum sound pressure $p_{Amax}$ is of interest here, this is obtained from:

$$p_{Amax} = |B(z)|$$

$$(23)$$

The curve for the back-face echo $p_{rwe}(z,t)$ is obtained if the fact is taken into account that ultrasound is totally reflected on the back face and returns to the transducer. However, the sound has now traveled the distance 2z (where z: distance to the back face). Therefore, equation (16) has to be adapted accordingly (z is replaced by 2z):

$$p_{rwe}(z,t) = 4\pi\omega Z \int_{a=0}^{\frac{D}{2}} e^{A\left(2z-\sqrt{4z^2+a^2}\right)^2}\frac{a}{\sqrt{a^2+4z^2}}\cos\left(\omega t - k\sqrt{a^2+4z^2}\right)\,da$$

$$(24)$$

This constitutes the equation for the back-face echo, which usually has to be solved numerically.

In order to calculate the ERS curves $p_{ksr}(z,t)$, it is presumed that the circular disk reflector oscillates over the entire surface with the calculated sound pressure p(z,t) on the acoustic axis at the distance z. Only the distances (shortest travel time) between the transducer and the circular disk reflector were considered. The received sound pressure is then obtained from the double integral over the circular disk surface area as a transmitter and over the transducer surface area as a receiver. In this case, the fact that the sound pressure of the circular disk reflector must be calculated for the distance from z to 2z (return travel of the sound) must be taken into account. This does not apply to the term for the distance, because the sound pressure for the way there $p_A(z)$ is already included in the calculation. Dispensing with proportionality factors, the following integral is then to be calculated, again using the addition theorems:

$$p_{ksr}(z,t) = p_A(z) \int_{x=0}^{\frac{D}{2}}\int_{y=0}^{\frac{D_{KSR}}{2}} e^{A\left(2z-\sqrt{4z^2+x^2}\right)^2}\frac{x\,y}{\sqrt{x^2+4z^2}}\cos\left(\omega t - k\sqrt{x^2+4z^2}\right)\,dx\,dy$$

$$(25)$$

where

    D: transducer diameter
    $D_{KSR}$: diameter of the circular disk reflector

$p_A(z)$: maximum sound pressure on the acoustic axis at the distance z

After the, if necessary numerical, calculation of this integral for all desired ERS curves, in which various proportionality factors were suppressed for simplification, the calculated curves must yet be shifted to the correct distance from the back-face echo curve. For example, the considerations on pages 102 and 103 of the book by Krautkrämer, Werkstoffprüfung mit Ultraschall, fifth completely revised edition, can be used for calculating the necessary shifts. These considerations only relate to the far field, so that they can also be used for pulsed sound.

As a result, a plurality of ERS curves is obtained which are specific to the transmitting transducer used, because they depend on the geometric dimensions D of the transmitting transducer, the transmission frequency f and on the bandwidth B of the generated pulses. Together with the back-face echo curve, which was also calculated, they form the transmitting transducer-specific DGS diagram for pulsed sound, which also applies in the near field, and can therefore form the basis for a reproducible determination of the equivalent reflector size ERS of a flaw/discontinuity 99, even if that lies in the near field of the ultrasonic transmitting transducer used. In the far field, the DGS diagram for pulsed sound then asymptotically approaches the DGS diagram for continuous sound used in the prior art, c.g. in the testing standard EN 583-2:2001.

During the validation of the ERS curves thus calculated, it was found that significant deviations are obtained if the size of the circular disk reflector becomes comparable to the size of the transmitting transducer. Presumably, this is connected with the assumption that the circular disk reflector oscillates over its entire surface with the same sound amplitude having a validity which is limited to large equivalent reflector sizes ERS. In order to obtain reproducible experimental results, it has proved in practice to make sense to pay attention to the criterion that the experimentally determined equivalent reflector size is no greater than half of the diameter D of the transmitting transducer, wherein, for the diameter of the generally approximately circular transmitting transducer, use is made, for example, of the above-defined size (diameter of a circular ultrasonic transducer of the same surface area).

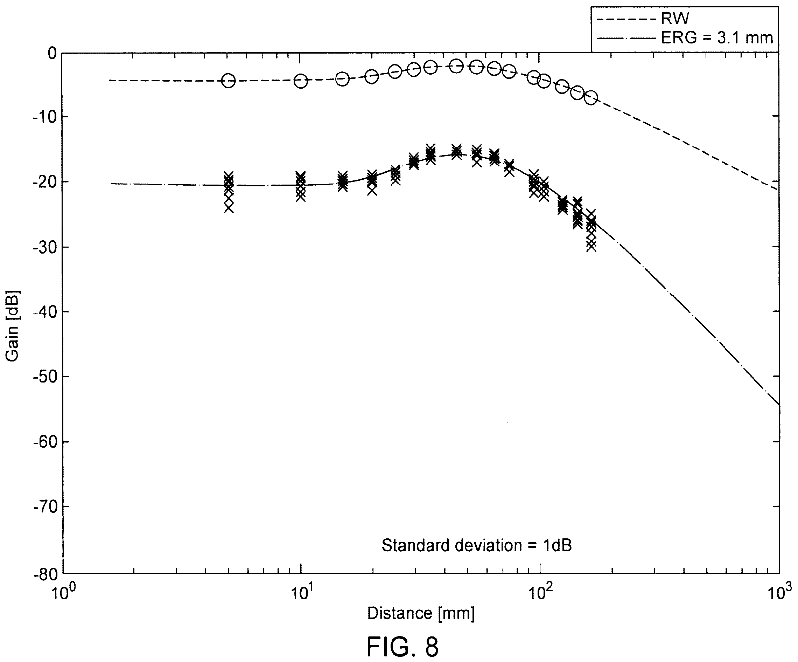

The effect on the near field of the DGS diagram determined for pulsed sound is apparent from Figures 7 and 8. Fig. 7 shows a graphical representation of a plurality of experimentally obtained gain values according to the DGS method, which were obtained in test measurements on circular disk reflectors (blind holes Ø 3 mm with different depths in a testing body). A DGS diagram according to the prior art, i.e. a DGS diagram according to EN 583-2:2001, was adapted to these experimentally obtained values. The pronounced deviations between the theoretical curve pattern and the measured values in the near field of the test probe are clearly recognizable. RW in this case denotes the back-face echo, ERS the echo of a circular disk reflector with a diameter of 3.1 mm.

In contrast, Figure 8 shows a graphical representation of the plurality of test measurements from Fig. 7 to which a bandwidth-dependent DGS diagram according to the present invention was adapted. Here, the result is also a diameter of the examined circular disk reflector of 3.1 mm. However, the echo curve for an equivalent reflector with 3.1 mm shows a good correspondence with the experimentally obtained values also within the near field of the test probe used. This implies that, using echo amplitudes of a flaw / discontinuity 99 located in the near field of the test probe, its ERS value can also be determined with good accuracy and reproducibility.

Reference numerals

| | |
|---|---|
| 1 | Testing device |
| 10 | Test probe |
| 12 | Ultrasonic transducer |
| 14 | Leading body |
| 20 | Control unit |
| 30 | Receiving unit |
| 40 | Evaluation unit |
| 42 | Display device |
| 44 | Message display panel |
| 50 | Ultrasound control device |
| 60 | Communication line |
| 99 | Flaw, discontinuity |
| 100 | Test object |

**Claims**

**1.**   A device (1) for the non-destructive testing of a test object (100) by means of ultrasound, the device (1) being configured for characterizing flaws or discontinuities (99) in material of the test object (100) in accordance with a DGS, i.e. distance-gain-size, method, which are located in the near field of an ultrasonic transducer (12) used for generating the ultrasound, wherein the device (1) comprises the following:

a. an ultrasonic test probe (10) with an ultrasonic transducer (12) for generating and coupling an ultrasonic field into the test object (100),

b. a control unit (20) for controlling the ultrasonic test probe (10) in such a way that the latter generates ultrasonic pulses with a certain bandwidth B,

c. a receiving unit (30) for recording echo signals by means of the ultrasonic test probe, and

d. an evaluation unit (40), which is connected to the receiving unit (30) and configured for processing the recorded echo signals,

e. wherein the evaluation unit (40) is configured for determining an equivalent reflector size ERS of the flaw or discontinuity (99), from received echo signals, based on a bandwidth-dependent DGS diagram determined dependent on the geometric dimensions D of the transmitting transducer (12), the transmission frequency F and the bandwidth B of the insonified ultrasonic pulses together with a calculated back-face echo curve,

**characterized in that** the back-face echo curve and ERS curves are calculated according to the following: theoretically determining the sound pressure on the acoustic axis for pulsed sound based on considerations regarding the sound pressure of a circular transmitting transducer with the diameter D for continuous sound, the sound pressure $p_A(z,t)$ at the distance z from the transducer at the time t being calculated using the following formula:

$$p_A(z,t) = \omega Z \int_S \frac{1}{r} \cos(\omega t - kr)\, dS$$

$$(1)$$

wherein:

$\omega$: angular frequency
Z: acoustic impedance
k: wave number
S: surface area of the circular transducer
and

$$r = \sqrt{z^2 + a^2} \quad \text{und} \quad k = \frac{2\pi}{\lambda}$$

$$dS \approx a\, da\, d\varphi$$

$$(2\ \&\ 3)$$

it thus follows:

$$p_A(z,t) = 2\omega Z \int_{a=0}^{\frac{D}{2}} \int_{\varphi=0}^{2\pi} \frac{a}{\sqrt{a^2 + z^2}} \cos\left(\omega t - k\sqrt{a^2 + z^2}\right)\, da\, d\varphi$$

$$(4)$$

first, the integration over $\varphi$ is carried out:

$$p_A(z,t) = 4\pi\omega Z \int_{a=0}^{\frac{D}{2}} \frac{a}{\sqrt{a^2 + z^2}} \cos\left(\omega t - k\sqrt{a^2 + z^2}\right) \, da$$

(5)

this integral equation is solved algebraically:

$$p_A(z,t) = -2\pi c Z \left\{ \sin\left(\omega t - k\sqrt{\left(\frac{D}{2}\right)^2 + z^2}\right) - \sin\left(\omega t - kz\right) \right\}$$

(6)

with the sound velocity c;
using the trigonometric addition theorems, this term is simplified:

$$\sin x - \sin y = 2\cos\frac{x+y}{2}\sin\frac{x-y}{2}$$

$$p_A(z,t) = -4\pi c Z \cos\frac{2\omega t - k\sqrt{\left(\frac{D}{2}\right)^2 + z^2} - kz}{2} \sin k\frac{\sqrt{\left(\frac{D}{2}\right)^2 + z^2} - z}{2}$$

$$= -4\pi c Z \cos\frac{2\omega t - k\sqrt{\left(\frac{D}{2}\right)^2 + z^2} - kz}{2} \sin\frac{\pi}{\lambda}\left(\sqrt{\left(\frac{D}{2}\right)^2 + z^2} - z\right)$$

(7 & 8)

only the time-independent extremes $p_{max}(z)$ of the sound pressure $p_A(z,t)$ are of interest here, therefore, only the extreme values are used for the cosine term and the absolute value of the sine term is considered:

$$p_{max}(z) = 4\pi c Z \left| \sin\frac{\pi}{\lambda}\left(\sqrt{\left(\frac{D}{2}\right)^2 + z^2} - z\right) \right|$$

(9)

the distance from the transducer to the last sound pressure maximum on the acoustic axis is referred to as near-field length N; the extremes are derived from the argument of the sine term in equation (9); the sine function has its extremes at:

$$\frac{2n+1}{2}\pi \text{ mit } n \in \mathbb{N}_0$$

(10)

therefore, the following term is examined:

$$\frac{\pi}{\lambda}\left(\sqrt{\left(\frac{D}{2}\right)^2 + z^2} - z\right) = \frac{2n+1}{2}\pi \text{ mit } n \in \mathbb{N}_0$$

$$\Rightarrow 2\sqrt{\left(\frac{D}{2}\right)^2 + z^2} = (2n+1)\lambda + 2z$$

(11)

squaring the equation and solving it for z yields:

$$z = \frac{D^2 - (2n+1)^2\lambda^2}{4(2n+1)\lambda}$$

(12)

thus, z is at a maximum when the term behind the minus sign in the numerator and the denominator are as small as possible, i.e. for n=0, thus, $z_{max} = N$ applies;

$$N = \frac{D^2 - \lambda^2}{4\lambda}$$

(13)

the Pythagorean theorem is appled to the right-angled triangle formed of half the transducer diameter D/2, the near-field length N and the marginal ray r in order to calculate the length of the marginal ray r up to the end of the near field yields:

$$r^2 = N^2 + \left(\frac{D}{2}\right)^2$$

$$\Rightarrow r^2 = \left(\frac{D^2 - \lambda^2}{4\lambda}\right)^2 + \left(\frac{D}{2}\right)^2$$

$$\Rightarrow r^2 = \frac{(D^2 + \lambda^2)^2}{16\lambda^2}$$

$$\Rightarrow r = \frac{D^2 + \lambda^2}{4\lambda}$$

$$\Rightarrow r = \frac{D^2 - \lambda^2}{4\lambda} + \frac{\lambda}{2}$$

$$\Rightarrow r = N + \frac{\lambda}{2}$$

(14)

that means that the difference of travel between the central ray and the marginal ray at the end of the near field is exactly $\lambda/2$ in the case of continuous sound; due to the fact that usually, $D \gg \lambda$, the following approximation for the near-field length N is useable instead of equation (13):

$$N \approx \frac{D^2}{4\lambda}$$

(15)

for calculating the sound pressure on the acoustic axis for pulsed sound, the integral (5) that applies for continuous sound is modified as follows:

$$p_A(z,t) = 4\pi\omega Z \int_{a=0}^{\frac{D}{2}} e^{A\left(z-\sqrt{z^2+a^2}\right)^2} \frac{a}{\sqrt{a^2+z^2}} \cos\left(\omega t - k\sqrt{a^2+z^2}\right) da \tag{16}$$

the selected Gaussian curve moves together with the sound, thus, a model of the pulse is generated, this equation being solved numerically, the factor A is used to set the bandwidth, again, the trigonometric addition theorems being used for solving the integral, thus, the above integral is divided into two integrals:

$$p_A(z,t) = 4\pi\omega Z \cos(\omega t) \underbrace{\int_{a=0}^{\frac{D}{2}} e^{A\left(z-\sqrt{z^2+a^2}\right)^2} \frac{a}{\sqrt{a^2+z^2}} \cos\left(k\sqrt{a^2+z^2}\right) da}_{x_1}$$

$$+ 4\pi\omega Z \sin(\omega t) \underbrace{\int_{a=0}^{\frac{D}{2}} e^{A\left(z-\sqrt{z^2+a^2}\right)^2} \frac{a}{\sqrt{a^2+z^2}} \sin\left(k\sqrt{a^2+z^2}\right) da}_{x_2} \tag{17}$$

this yields, as a solution of p(z,t), a term of the form:

$$F = x_1 \cos(\omega t) + x_2 \sin(\omega t) \tag{18}$$

the values of B and $\varphi$ are determined from the following equation:

$$x_1 \cos(\omega t) + x_2 \sin(\omega t) = B \sin(\omega t + \varphi)$$
$$\Rightarrow x_1 \cos(\omega t) + x_2 \sin(\omega t) = B \sin(\omega t) \cos(\varphi) + B \cos(\omega t) \sin(\varphi) \tag{19}$$

by comparison, it follows from the last equation:

$$x_1 = B \sin(\varphi)$$
$$x_2 = B \cos(\varphi) \tag{20}$$

therefore, the following continues to apply:

$$\frac{1}{x_1^2}\sin^2\varphi = \frac{1}{x_2^2}\left(1-\sin^2\varphi\right)$$

$$\sin^2\varphi = \frac{x_1^2}{x_1^2+x_2^2}$$

$$\sin\varphi = \pm\frac{x_1}{\sqrt{x_1^2+x_2^2}}$$

$$B(z) = \pm\sqrt{x_1^2+x_2^2}$$

(21)

thus, the sound pressure $p_A$ on the acoustic axis can be given, for any depth and for any point in time t, as:

$$p_A(z,t) = B(z)\sin(\omega t + \varphi)$$

(22)

since only the maximum sound pressure $p_{Amax}$ is of interest here, this is obtained from:

$$p_{Amax} = |B(z)|$$

(23)

the curve for the back-face echo $p_{rwe}(z,t)$ is obtained as the fact is taken into account that ultrasound is totally reflected on the back face and returns to the transducer, however, the sound has now traveled the distance 2z, therefore, equation (16) is adapted accordingly so that z is replaced by 2z:

$$p_{rwe}(z,t) = 4\pi\omega Z \int_{a=0}^{\frac{D}{2}} e^{A\left(2z-\sqrt{4z^2+a^2}\right)^2}\frac{a}{\sqrt{a^2+4z^2}}\cos\left(\omega t - k\sqrt{a^2+4z^2}\right)\,da$$

(24)

this constitutes the equation for the back-face echo;

in order to calculate the ERS curves $p_{ksr}(z,t)$, it is presumed that the circular disk reflector oscillates over the entire surface with the calculated sound pressure p(z,t) on the acoustic axis at the distance z, only the distances with shortest travel time between the transducer and the circular disk reflector are considered, the received sound pressure is then obtained from the double integral over the circular disk surface area as a transmitter and over the transducer surface area as a receiver, in this case, the fact that the sound pressure of the circular disk reflector must be calculated for the distance from z to 2z i.e. return travel of the sound must be taken into account, this does not apply to the term for the distance, because the sound pressure for the way there $p_A(z)$ is already included in the calculation, dispensing with proportionality factors, the following integral is then calculated, again using the addition theorems:

$$p_{ksr}(z,t) = p_A(z) \int_{x=0}^{\frac{D}{2}}\int_{y=0}^{\frac{D_{KSR}}{2}} e^{A\left(2z-\sqrt{4z^2+x^2}\right)^2}\frac{x\,y}{\sqrt{x^2+4z^2}}\cos\left(\omega t - k\sqrt{x^2+4z^2}\right)\,dx\,dy$$

(25)

where

$D_{KSR}$: diameter of the circular disk reflector

$p_A(z)$: maximum sound pressure on the acoustic axis at the distance z

after the calculation of this integral for all desired ERS curves, in which various proportionality factors were suppressed for simplification, the calculated curves are shifted to the correct distance from the back-face echo curve; these considerations only relate to the far field, so that they can also be used for pulsed sound,
as a result, a plurality of ERS curves is obtained which are specific to the transmitting transducer used, because they depend on the geometric dimensions D of the transmitting transducer, the transmission frequency f and on the bandwidth B of the generated pulses, together with the back-face echo curve, which was also calculated, they form the transmitting transducer-specific DGS diagram for pulsed sound, which also applies in the near field, and therefore forms the basis for a reproducible determination of the equivalent reflector size ERS of a flaw/discontinuity (99), even if that lies in the near field of the ultrasonic transmitting transducer used.

2. The device (1) according to claim 1, wherein the device (1), in particular the test probe (10), is configured to generate a sound field that is rotationally symmetric in the test object.

3. The device (1) according to claim 1 or 2, wherein the test probe (10) is configured for oblique insonification into the test object (100).

4. The device (1) according to any of claims 1, 2 or 3, wherein the DGS diagram is determined dependent on the polarization P of the insonified ultrasonic pulses.

5. The device (1) according to any preceding claim, wherein the DGS diagram is stored in the evaluation unit (40) as a function F containing the diameter $D_{KSR}$ of a circular disk reflector as a parameter (p).

6. The device (1) according to any preceding claim, wherein the evaluation unit (40) is configured to generate an indication for a human operator if the ratio of the diameter D to the equivalent reflector size ERS determined from a flaw indication drops below a predetermined threshold,

7. The device (1) according to claim 6, wherein the threshold is greater than 1/8, preferably greater than 1/4, and particularly preferably greater than or equal to 1/2.

8. A method for the non-destructive testing of a test object (100) by means of ultrasound, the method serving for characterizing flaws or discontinuities (99) in material of the test object (100) in accordance with a DGS, i.e. distance-gain-size, method, which are located in the near field of an ultrasonic transducer (12) used for generating the ultrasound, wherein the method comprises the following method steps:

   a. coupling ultrasonic pulses with a certain bandwidth B into the test object (100),
   b. recording echo signals from the test object (100),
   c. determining an equivalent reflector size ERS of a flaw or discontinuity (99) causing the recorded echo signals, from received echo signals, based on a bandwidth-dependent DGS diagram determined dependent on the geometric dimensions D of the transmitting transducer (12), the transmission frequency F and the bandwidth B of the insonified ultrasonic pulses together with a calculated back-face echo curve,

   **characterized in that** the back-face echo curve and ERS curves are calculated according to the following: theoretically determining the sound pressure on the acoustic axis for pulsed sound based on considerations regarding the sound pressure of a circular transmitting transducer with the diameter D for continuous sound, the sound pressure $p_A(z,t)$ at the distance z from the transducer at the time t being calculated using the following formula:

$$p_A(z,t) = \omega Z \int_S \frac{1}{r} \cos(\omega t - kr)\, dS$$

(1)

   wherein:

   $\omega$: angular frequency
   Z: acoustic impedance
   k: wave number
   S: surface area of the circular transducer
   and

$$r = \sqrt{z^2 + a^2} \quad \text{und} \quad k = \frac{2\pi}{\lambda}$$

$$dS \approx a \, da \, d\varphi$$

(2 & 3)

it thus follows:

$$p_A(z,t) = 2\omega Z \int\limits_{a=0}^{\frac{D}{2}} \int\limits_{\varphi=0}^{2\pi} \frac{a}{\sqrt{a^2 + z^2}} \cos\left(\omega t - k\sqrt{a^2 + z^2}\right) \, da \, d\varphi$$

(4)

first, the integration over φ is carried out:

$$p_A(z,t) = 4\pi\omega Z \int\limits_{a=0}^{\frac{D}{2}} \frac{a}{\sqrt{a^2 + z^2}} \cos\left(\omega t - k\sqrt{a^2 + z^2}\right) \, da$$

(5)

this integral equation is solved algebraically:

$$p_A(z,t) = -2\pi c Z \left\{ \sin\left(\omega t - k\sqrt{\left(\frac{D}{2}\right)^2 + z^2}\right) - \sin\left(\omega t - kz\right) \right\}$$

(6)

with the sound velocity c;
using the trigonometric addition theorems, this term is simplified:

$$\sin x - \sin y = 2\cos\frac{x+y}{2} \, \sin\frac{x-y}{2}$$

$$p_A(z,t) = -4\pi c Z \cos\frac{2\omega t - k\sqrt{\left(\frac{D}{2}\right)^2 + z^2} - kz}{2} \, \sin k \frac{\sqrt{\left(\frac{D}{2}\right)^2 + z^2} - z}{2}$$

$$= -4\pi c Z \cos\frac{2\omega t - k\sqrt{\left(\frac{D}{2}\right)^2 + z^2} - kz}{2} \, \sin\frac{\pi}{\lambda}\left(\sqrt{\left(\frac{D}{2}\right)^2 + z^2} - z\right)$$

(7 & 8)

only the time-independent extremes $p_{max}(z)$ of the sound pressure $p_A(z,t)$ are of interest here, therefore, only the extreme values are used for the cosine term and the absolute value of the sine term is considered:

$$p_{max}(z) = 4\pi cZ \left| \sin \frac{\pi}{\lambda} \left( \sqrt{\left(\frac{D}{2}\right)^2 + z^2} - z \right) \right|$$

$$(9)$$

the distance from the transducer to the last sound pressure maximum on the acoustic axis is referred to as near-field length N; the extremes are derived from the argument of the sine term in equation (9); the sine function has its extremes at:

$$\frac{2n+1}{2} \pi \ \text{mit} \ n \in \mathbb{N}_0$$

$$(10)$$

therefore, the following term is examined:

$$\frac{\pi}{\lambda} \left( \sqrt{\left(\frac{D}{2}\right)^2 + z^2} - z \right) = \frac{2n+1}{2} \pi \ \text{mit} \ n \in \mathbb{N}_0$$

$$\Rightarrow \ 2 \sqrt{\left(\frac{D}{2}\right)^2 + z^2} = (2n+1)\lambda + 2z$$

$$(11)$$

squaring the equation and solving it for z yields:

$$z = \frac{D^2 - (2n+1)^2 \lambda^2}{4 (2n+1) \lambda}$$

$$(12)$$

thus, z is at a maximum when the term behind the minus sign in the numerator and the denominator are as small as possible, i.e. for n=0, thus, $z_{max}$ = N applies:

$$N = \frac{D^2 - \lambda^2}{4\lambda}$$

$$(13)$$

the Pythagorean theorem is appled to the right-angled triangle formed of half the transducer diameter D/2, the near-field length N and the marginal ray r in order to calculate the length of the marginal ray r up to the end of the near field yields:

$$r^2 = N^2 + \left(\frac{D}{2}\right)^2$$

$$\Rightarrow r^2 = \left(\frac{D^2 - \lambda^2}{4\lambda}\right)^2 + \left(\frac{D}{2}\right)^2$$

$$\Rightarrow r^2 = \frac{(D^2 + \lambda^2)^2}{16\,\lambda^2}$$

$$\Rightarrow r = \frac{D^2 + \lambda^2}{4\,\lambda}$$

$$\Rightarrow r = \frac{D^2 - \lambda^2}{4\,\lambda} + \frac{\lambda}{2}$$

$$\Rightarrow r = N + \frac{\lambda}{2}$$

(14)

that means that the difference of travel between the central ray and the marginal ray at the end of the near field is exactly λ/2 in the case of continuous sound; due to the fact that usually, D >> λ, the following approximation for the near-field length N is useable instead of equation (13):

$$N \approx \frac{D^2}{4\,\lambda}$$

(15)

for calculating the sound pressure on the acoustic axis for pulsed sound, the integral (5) that applies for continuous sound is modified as follows:

$$p_A(z,t) = 4\pi\omega Z \int_{a=0}^{\frac{D}{2}} e^{A\left(z - \sqrt{z^2 + a^2}\right)^2} \frac{a}{\sqrt{a^2 + z^2}} \cos\left(\omega t - k\sqrt{a^2 + z^2}\right)\, da$$

(16)

the selected Gaussian curve moves together with the sound, thus, a model of the pulse is generated, this equation being solved numerically, the factor A is used to set the bandwidth, again, the trigonometric addition theorems being used for solving the integral, thus, the above integral is divided into two integrals:

$$p_A(z,t) = 4\pi\omega Z \cos(\omega t) \underbrace{\int_{a=0}^{\frac{D}{2}} e^{A\left(z - \sqrt{z^2 + a^2}\right)^2} \frac{a}{\sqrt{a^2 + z^2}} \cos\left(k\sqrt{a^2 + z^2}\right)\, da}_{x_1}$$

$$+ 4\pi\omega Z \sin(\omega t) \underbrace{\int_{a=0}^{\frac{D}{2}} e^{A\left(z - \sqrt{z^2 + a^2}\right)^2} \frac{a}{\sqrt{a^2 + z^2}} \sin\left(k\sqrt{a^2 + z^2}\right)\, da}_{x_2}$$

(17)

this yields, as a solution of p(z,t), a term of the form:

$$F = x_1 \cos(\omega t) + x_2 \sin(\omega t) \tag{18}$$

the values of B and $\varphi$ are determined from the following equation:

$$x_1 \cos(\omega t) + x_2 \sin(\omega t) = B \sin(\omega t + \varphi)$$
$$\Rightarrow x_1 \cos(\omega t) + x_2 \sin(\omega t) = B \sin(\omega t)\,\cos(\varphi) + B \cos(\omega t)\,\sin(\varphi) \tag{19}$$

by comparison, it follows from the last equation:

$$x_1 = B \sin(\varphi)$$
$$x_2 = B \cos(\varphi) \tag{20}$$

therefore, the following continues to apply:

$$\frac{1}{x_1^2} \sin^2 \varphi = \frac{1}{x_2^2}\left(1 - \sin^2 \varphi\right)$$
$$\sin^2 \varphi = \frac{x_1^2}{x_1^2 + x_2^2}$$
$$\sin \varphi = \pm \frac{x_1}{\sqrt{x_1^2 + x_2^2}}$$
$$B(z) = \pm\sqrt{x_1^2 + x_2^2} \tag{21}$$

thus, the sound pressure $p_A$ on the acoustic axis can be given, for any depth and for any point in time t, as:

$$p_A(z,t) = B(z) \sin(\omega t + \varphi) \tag{22}$$

since only the maximum sound pressure $p_{Amax}$ is of interest here, this is obtained from:

$$p_{Amax} = |B(z)| \tag{23}$$

the curve for the back-face echo $p_{rwe}(z,t)$ is obtained as the fact is taken into account that ultrasound is totally reflected on the back face and returns to the transducer, however, the sound has now traveled the distance 2z, therefore, equation (16) is adapted accordingly z is replaced by 2z:

$$p_{rwe}(z,t) = 4\pi\omega Z \int_{a=0}^{\frac{D}{2}} e^{A\left(2z - \sqrt{4z^2 + a^2}\right)^2} \frac{a}{\sqrt{a^2 + 4z^2}} \cos\left(\omega t - k\sqrt{a^2 + 4z^2}\right)\, da \tag{24}$$

this constitutes the equation for the back-face echo;
in order to calculate the ERS curves $p_{ksr}(z,t)$, it is presumed that the circular disk reflector oscillates over the entire surface with the calculated sound pressure p(z,t) on the acoustic axis at the distance z, only the distances (shortest travel time) between the transducer and the circular disk reflector are considered, the received sound pressure is then obtained from the double integral over the circular disk surface area as a transmitter and over the transducer surface area as a receiver, in this case, the fact that the sound pressure of the circular disk reflector must be calculated for the distance from z to 2z i.e. travel of the sound must be taken into account, this does not apply to the term for the distance, because the sound pressure for the way there $p_A(z)$ is already included in the calculation, dispensing with proportionality factors, the following integral is then calculated, again using the addition theorems:

$$p_{ksr}(z,t) = p_A(z) \int_{x=0}^{\frac{D}{2}} \int_{y=0}^{\frac{D_{KSR}}{2}} e^{A\left(2z-\sqrt{4z^2+x^2}\right)^2} \frac{x\,y}{\sqrt{x^2+4z^2}} \cos\left(\omega t - k\sqrt{x^2+4z^2}\right)\, dx\,dy$$

(25)

where

$D_{KSR}$: diameter of the circular disk reflector

$p_A(z)$: maximum sound pressure on the acoustic axis at the distance z

after the calculation of this integral for all desired ERS curves, in which various proportionality factors were suppressed for simplification, the calculated curves are shifted to the correct distance from the back-face echo curve; these considerations only relate to the far field, so that they can also be used for pulsed sound,

as a result, a plurality of ERS curves is obtained which are specific to the transmitting transducer used, because they depend on the geometric dimensions D of the transmitting transducer, the transmission frequency f and on the bandwidth B of the generated pulses, together with the back-face echo curve, which was also calculated, they form the transmitting transducer-specific DGS diagram for pulsed sound, which also applies in the near field, and therefore forms the basis for a reproducible determination of the equivalent reflector size ERS of a flaw/discontinuity (99), even if that lies in the near field of the ultrasonic transmitting transducer used.

9. The method according to claim 8, wherein the ultrasonic pulses generate a sound field that is rotationally symmetric in the test object (100).

10. The method according to claim 8 or 9, wherein the ultrasonic pulses are insonified obliquely into the test object (100).

11. The method according to any of claims 8 to 10, wherein the DGS diagram is determined dependent on the polarization P of the insonified ultrasonic pulses.

12. The method according to any of claims 8 to 11, wherein a DGS diagram in the form of a function is used which contains the diameter DKSR of a circular disk reflector as a parameter (p).

13. The method according to claim 12, wherein a fitting of the function F with respect to the parameter p to experimentally determined echo values of the flaw / discontinuity (99) is carried out to determine the equivalent reflector size ERS of a detected flaw / discontinuity (99).

14. The method according to any of claims 8 to 13, wherein an indication for a human operator is generated if the ratio of the diameter D to the equivalent reflector size ERS determined from a flaw indication drops below a predetermined threshold.

**Patentansprüche**

1. Vorrichtung (1) zur zerstörungsfreien Prüfung eines Prüflings (100) mittels Ultraschall, wobei die Vorrichtung (1) konfiguriert ist, um Fehler oder Ungänzen (99) im Material des Prüflings (100) gemäß einem AVG-Verfahren, d. h. einem Distance-Gain-Size-Verfahren, zu charakterisieren, die sich im Nahfeld eines zur Erzeugung des Ultraschalls verwendeten Ultraschallwandlers (12) befinden, wobei die Vorrichtung (1) Folgendes umfasst:

a. einen Ultraschallprüfkopf (10) mit einem Ultraschallwandler (12) zur Erzeugung und Einkopplung eines Ultraschallfeldes in den Prüfling (100),
b. eine Steuereinheit (20) zum Steuern der Ultraschallprüfsonde (10) derart, dass diese Ultraschallimpulse mit einer bestimmten Bandbreite B erzeugt,

c. eine Empfangseinheit (30) zum Aufzeichnen von Echosignalen mittels der Ultraschallprüfsonde, und

d. eine Auswerteeinheit (40), die mit der Empfangseinheit (30) verbunden und zur Verarbeitung der aufgezeichneten Echosignale konfiguriert ist,

e. wobei die Auswerteeinheit (40) konfiguriert ist, um aus empfangenen Echosignalen eine äquivalente Reflektorgröße ERS des Fehlers oder der Ungänze (99) zu bestimmen, basierend auf einem bandbreitenabhängigen AVG-Diagramm, das in Abhängigkeit von den geometrischen Abmessungen D des Sendewandlers (12), der Sendefrequenz F und der Bandbreite B der eingeschallten Ultraschallimpulse zusammen mit einer berechneten Rückseitenechokurve ermittelt wird,

**dadurch gekennzeichnet, dass** die Rückseitenechokurve und die ERS-Kurven wie folgt berechnet werden:

theoretisches Bestimmen des Schalldrucks auf der akustischen Achse für gepulsten Schall basierend auf Überlegungen zum Schalldruck eines kreisförmigen Sendewandlers mit dem Durchmesser D für Dauerschall, wobei der Schalldruck $p_A(z,t)$ im Abstand z vom Wandler zum Zeitpunkt t mit der folgenden Formel berechnet wird:

$$p_A(z,t) = \omega Z \int_S \frac{1}{r} \cos(\omega t - kr)\, dS$$

$$(1)$$

wobei:

$\omega$: Kreisfrequenz
$Z$: akustische Impedanz
$k$: Wellenzahl
$S$: Oberfläche des kreisförmigen Wandlers
und

$$r = \sqrt{z^2 + a^2} \quad \text{und} \quad k = \frac{2\pi}{\lambda}$$

$$dS \approx a\, da\, d\varphi$$

$$(2\ \&\ 3)$$

daraus folgt:

$$p_A(z,t) = 2\omega Z \int_{a=0}^{\frac{D}{2}} \int_{\varphi=0}^{2\pi} \frac{a}{\sqrt{a^2 + z^2}} \cos\left(\omega t - k\sqrt{a^2 + z^2}\right)\, da\, d\varphi$$

$$(4)$$

zunächst wird die Integration über $\varphi$ durchgeführt:

$$p_A(z,t) = 4\pi\omega Z \int_{a=0}^{\frac{D}{2}} \frac{a}{\sqrt{a^2 + z^2}} \cos\left(\omega t - k\sqrt{a^2 + z^2}\right)\, da$$

$$(5)$$

diese Integralgleichung wird algebraisch gelöst:

$$p_A(z,t) = -2\pi c Z \left\{ \sin\left(\omega t - k\sqrt{\left(\frac{D}{2}\right)^2 + z^2}\right) - \sin(\omega t - kz) \right\} \tag{6}$$

mit der Schallgeschwindigkeit c;
unter Verwendung der trigonometrischen Additionssätze wird dieser Term vereinfacht:

$$\sin x - \sin y = 2\cos\frac{x+y}{2} \sin\frac{x-y}{2}$$

$$p_A(z,t) = -4\pi c Z \cos\frac{2\omega t - k\sqrt{\left(\frac{D}{2}\right)^2 + z^2} - kz}{2} \sin k\frac{\sqrt{\left(\frac{D}{2}\right)^2 + z^2} - z}{2}$$

$$= -4\pi c Z \cos\frac{2\omega t - k\sqrt{\left(\frac{D}{2}\right)^2 + z^2} - kz}{2} \sin\frac{\pi}{\lambda}\left(\sqrt{\left(\frac{D}{2}\right)^2 + z^2} - z\right) \tag{7 und 8}$$

nur die zeitunabhängigen Extreme $p_{max}(z)$ des Schalldrucks $p_A(z,t)$ sind hier von Interesse, daher werden für den Cosinus-Term nur die Extremwerte verwendet und der Absolutwert des Sinus-Terms wird betrachtet:

$$p_{max}(z) = 4\pi c Z \left| \sin\frac{\pi}{\lambda}\left(\sqrt{\left(\frac{D}{2}\right)^2 + z^2} - z\right) \right| \tag{9}$$

als Nahfeldlänge N wird der Abstand vom Wandler bis zum letzten Schalldruckmaximum auf der akustischen Achse bezeichnet; die Extreme werden aus dem Argument des Sinusterms in Gleichung (9) abgeleitet; die Sinusfunktion hat ihre Extremwerte bei:

$$\frac{2n+1}{2}\pi \text{ mit } n \in \mathbb{N}_0 \tag{10}$$

daher wird folgender Term untersucht:

$$\frac{\pi}{\lambda}\left(\sqrt{\left(\frac{D}{2}\right)^2 + z^2} - z\right) = \frac{2n+1}{2}\pi \text{ mit } n \in \mathbb{N}_0$$

$$\Rightarrow 2\sqrt{\left(\frac{D}{2}\right)^2 + z^2} = (2n+1)\lambda + 2z \tag{11}$$

Quadrieren der Gleichung und Auflösen nach z ergibt:

$$z = \frac{D^2 - (2n + 1)^2 \, \lambda^2}{4 \, (2n + 1) \, \lambda}$$

$$(12)$$

$z$ ist demnach maximal, wenn der Term hinter dem Minuszeichen im Zähler und Nenner möglichst klein ist, d. h. für n=0, also $z_{max}$ = N gilt;

$$N = \frac{D^2 - \lambda^2}{4 \, \lambda}$$

$$(13)$$

wendet man den Satz des Pythagoras auf das rechtwinklige Dreieck an, das aus dem halben Wandlerdurchmesser D/2, der Nahfeldlänge N und dem Randstrahl r gebildet wird, um die Länge des Randstrahls r bis zum Ende des Nahfelds zu berechnen, ergibt dies:

$$r^2 = N^2 + \left(\frac{D}{2}\right)^2$$

$$\Rightarrow r^2 = \left(\frac{D^2 - \lambda^2}{4\lambda}\right)^2 + \left(\frac{D}{2}\right)^2$$

$$\Rightarrow r^2 = \frac{(D^2 + \lambda^2)^2}{16 \, \lambda^2}$$

$$\Rightarrow r = \frac{D^2 + \lambda^2}{4 \, \lambda}$$

$$\Rightarrow r = \frac{D^2 - \lambda^2}{4 \, \lambda} + \frac{\lambda}{2}$$

$$\Rightarrow r = N + \frac{\lambda}{2}$$

$$(14)$$

das heißt, dass der Laufzeitunterschied zwischen dem Zentralstrahl und dem Randstrahl am Ende des Nahfeldes bei Dauerschall genau λ/2 beträgt; da üblicherweise D » λ gilt, ist anstelle von Gleichung (13) folgende Näherung für die Nahfeldlänge N verwendbar:

$$N \approx \frac{D^2}{4 \, \lambda}$$

$$(15)$$

zum Berechnen des Schalldrucks auf der akustischen Achse für gepulsten Schall wird das für Dauerschall angewendete Integral (5) wie folgt modifiziert:

$$p_A(z, t) = 4\pi\omega Z \int_{a=0}^{\frac{D}{2}} e^{A\left(z - \sqrt{z^2 + a^2}\right)^2} \frac{a}{\sqrt{a^2 + z^2}} \cos\left(\omega t - k\sqrt{a^2 + z^2}\right) \, da$$

$$(16)$$

die ausgewählte Gauß-Kurve bewegt sich zusammen mit dem Schall, wodurch ein Modell des Impulses erzeugt wird, diese Gleichung numerisch gelöst wird, der Faktor A verwendet wird, um die Bandbreite festzulegen, zur Lösung des Integrals wiederum die trigonometrischen Additionssätze verwendet werden, und demnach das obige Integral in zwei Integrale aufgeteilt wird:

$$p_A(z,t) = 4\pi\omega Z \cos(\omega t) \underbrace{\int_{a=0}^{\frac{D}{2}} e^{A\left(z-\sqrt{z^2+a^2}\right)^2} \frac{a}{\sqrt{a^2+z^2}} \cos\left(k\sqrt{a^2+z^2}\right) da}_{x_1}$$

$$+ 4\pi\omega Z \sin(\omega t) \underbrace{\int_{a=0}^{\frac{D}{2}} e^{A\left(z-\sqrt{z^2+a^2}\right)^2} \frac{a}{\sqrt{a^2+z^2}} \sin\left(k\sqrt{a^2+z^2}\right) da}_{x_2}$$

$$(17)$$

dies ergibt als Lösung von p(z,t) einen Term der Form:

$$F = x_1 \cos(\omega t) + x_2 \sin(\omega t) \quad (18)$$

die Werte von B und $\varphi$ werden aus der folgenden Gleichung bestimmt:

$$x_1 \cos(\omega t) + x_2 \sin(\omega t) = B \sin(\omega t + \varphi)$$
$$\Rightarrow x_1 \cos(\omega t) + x_2 \sin(\omega t) = B \sin(\omega t) \cos(\varphi) + B \cos(\omega t) \sin(\varphi) \quad (19)$$

im Vergleich dazu folgt aus der letzten Gleichung:

$$x_1 = B \sin(\varphi)$$
$$x_2 = B \cos(\varphi) \quad (20)$$

daher gilt weiterhin Folgendes:

$$\frac{1}{x_1^2} \sin^2\varphi = \frac{1}{x_2^2}\left(1 - \sin^2\varphi\right)$$
$$\sin^2\varphi = \frac{x_1^2}{x_1^2 + x_2^2}$$
$$\sin\varphi = \pm\frac{x_1}{\sqrt{x_1^2 + x_2^2}}$$
$$B(z) = \pm\sqrt{x_1^2 + x_2^2}$$

$$(21)$$

somit kann der Schalldruck $p_A$ auf der akustischen Achse für jede Tiefe und für jeden Zeitpunkt t wie folgt angegeben werden:

$$p_A(z,t) = B(z)\sin(\omega t + \varphi) \quad (22)$$

28

da nur der maximale Schalldruck $p_{Amax}$ hier von Interesse ist, wird dieser erhalten aus:

$$p_{Amax} = |B(z)| \quad (23)$$

die Kurve für das Rückseitenecho $p_{rwe}(z,t)$ ergibt sich aus der Tatsache, dass der Ultraschall an der Rückseite total reflektiert wird und zum Wandler zurückkehrt, der Schall jedoch inzwischen die Distanz 2z zurückgelegt hat, weshalb Gleichung (16) entsprechend angepasst wird, sodass z durch 2z ersetzt wird:

$$p_{rwe}(z,t) = 4\pi\omega Z \int_{a=0}^{\frac{D}{2}} e^{A\left(2z-\sqrt{4z^2+a^2}\right)^2} \frac{a}{\sqrt{a^2+4z^2}} \cos\left(\omega t - k\sqrt{a^2+4z^2}\right) \, da$$

$$(24)$$

dies stellt die Gleichung für das Rückseitenecho dar;

zur Berechnung der ERS-Kurven $p_{ksr}(z,t)$, wird angenommen, dass der Kreisscheibenreflektor mit dem berechneten Schalldruck p(z,t) auf der akustischen Achse im Abstand z vollflächig schwingt, werden nur die Abstände mit der kürzesten Laufzeit zwischen Wandler und Kreisscheibenreflektor berücksichtigt, ergibt sich der empfangene Schalldruck demnach aus dem Doppelintegral über die Kreisscheibenoberfläche als Sender und über die Wandleroberfläche als Empfänger, wobei in diesem Fall der Schalldruck des Kreisscheibenreflektors für den Abstand von z bis 2z, d. h. der Rückweg des Schalls, berücksichtigt werden muss, wobei dies nicht für den Term für den Abstand gilt, da der Schalldruck für den Hinweg $p_A(z)$ bereits in die Berechnung einbezogen ist und auf Proportionalitätsfaktoren verzichtet wird, wobei dann wiederum unter Verwendung der Additionstheoreme, folgendes Integral berechnet wird:

$$p_{ksr}(z,t) = p_A(z) \int_{x=0}^{\frac{D}{2}} \int_{y=0}^{\frac{D_{KSR}}{2}} e^{A\left(2z-\sqrt{4z^2+z^2}\right)^2} \frac{x\,y}{\sqrt{x^2+4z^2}} \cos\left(\omega t - k\sqrt{x^2+4z^2}\right) \, dx \, dy$$

$$(25)$$

wobei

$D_{KSR}$: Durchmesser des Kreisscheibenreflektors

$P_A(z)$: maximaler Schalldruck auf der akustischen Achse im Abstand z

nach der Berechnung dieses Integrals für alle gewünschten ERS-Kurven, bei der zur Vereinfachung diverse Proportionalitätsfaktoren weggelassen wurden, werden die berechneten Kurven auf den richtigen Abstand zur Rückseitenechokurve verschoben; diese Überlegungen beziehen sich nur auf das Fernfeld, so dass sie auch für gepulsten Schall verwendet werden können,

infolgedessen erhält man eine Vielzahl von ERS-Kurven, die spezifisch für den verwendeten Sendewandler sind, da sie von den geometrischen Abmessungen D des Sendewandlers, der Sendefrequenz f und der Bandbreite B der erzeugten Impulse abhängen und zusammen mit der ebenfalls berechneten Rückseitenechokurve das sendewandlerspezifische AVG-Diagramm für gepulsten Schall bilden, welches auch im Nahfeld gültig ist und somit die Grundlage für eine reproduzierbare Bestimmung der äquivalenten Reflektorgröße ERS eines Fehlers/einer Ungänze (99) bildet, auch wenn diese im Nahfeld des verwendeten Ultraschallsendewandlers liegt.

2. Vorrichtung (1) nach Anspruch 1, wobei die Vorrichtung (1), insbesondere die Prüfsonde (10), konfiguriert ist, um im Prüfling ein rotationssymmetrisches Schallfeld zu erzeugen.

3. Vorrichtung (1) nach Anspruch 1 oder 2, wobei die Prüfsonde (10) zur Schrägeinschallung in den Prüfling (100) konfiguriert ist.

4. Vorrichtung (1) nach einem der Ansprüche 1, 2 oder 3, wobei das AVG-Diagramm in Abhängigkeit von der Polarisation P der eingeschallten Ultraschallimpulse ermittelt wird.

5. Vorrichtung (1) nach einem der vorstehenden Ansprüche, wobei das AVG-Diagramm in der Auswerteeinheit (40) als Funktion F gespeichert ist, die den Durchmesser $D_{KSR}$ eines Kreisscheibenreflektors als Parameter (p) enthält.

6. Vorrichtung (1) nach einem der vorstehenden Ansprüche, wobei die Auswerteeinheit (40) konfiguriert ist, um einen Hinweis für einen menschlichen Bediener zu erzeugen, wenn das aus einer Fehleranzeige ermittelte Verhältnis des Durchmessers D zur äquivalenten Reflektorgröße ERS unter einen vorgegebenen Schwellenwert fällt.

7. Vorrichtung (1) nach Anspruch 6, wobei der Schwellenwert größer ist als 1/8, bevorzugt größer 1/4 und besonders bevorzugt größer gleich 1/2.

8. Verfahren zur zerstörungsfreien Prüfung eines Prüflings (100) mittels Ultraschall, wobei das Verfahren zu Charakterisierung von Fehlern oder Ungänzen (99) im Material des Prüflings (100) gemäß einem AVG, d. h. einem Distance-Gain-Size-Verfahren, die sich im Nahfeld eines zur Erzeugung des Ultraschalls verwendeten Ultraschallwandlers (12) befinden, wobei das Verfahren die folgenden Verfahrensschritte umfasst:

   a. Einkoppeln von Ultraschallimpulsen mit einer bestimmten Bandbreite B in den Prüfling (100),
   b. Aufzeichnen von Echosignalen vom Prüfling (100),
   c. Bestimmen einer äquivalenten Reflektorgröße ERS eines Fehlers oder einer Ungänze (99) , die die aufgezeichneten Echosignale verursachen, aus den empfangenen Echosignalen, auf Grundlage eines bandbreitenabhängigen AVG-Diagramms, das in Abhängigkeit der geometrischen Abmessungen D des Sendewandlers (12), der Sendefrequenz F und der Bandbreite B der eingeschallten Ultraschallimpulse zusammen mit einer berechneten Rückseitenechokurve bestimmt wird,

   **dadurch gekennzeichnet, dass** die Rückseitenechokurve und die ERS-Kurven wie folgt berechnet werden:

   theoretisches Bestimmen des Schalldrucks auf der akustischen Achse für gepulsten Schall basierend auf Überlegungen zum Schalldruck eines kreisförmigen Sendewandlers mit dem Durchmesser D für Dauerschall, wobei der Schalldruck $p_A(z,t)$ im Abstand z vom Wandler zum Zeitpunkt t mit der folgenden Formel berechnet wird:

$$p_A(z,t) = \omega Z \int_S \frac{1}{r} \cos(\omega t - kr)\, dS$$

$$(1)$$

   wobei:

   $\omega$: Kreisfrequenz
   Z: akustische Impedanz
   k: Wellenzahl
   S: Oberfläche des kreisförmigen Wandlers
   und

$$r = \sqrt{z^2 + a^2} \quad \text{und} \quad k = \frac{2\pi}{\lambda}$$

$$dS \approx a\, da\, d\varphi$$

$$(2 \& 3)$$

   daraus folgt:

$$p_A(z,t) = 2\omega Z \int\limits_{a=0}^{\frac{D}{2}} \int\limits_{\varphi=0}^{2\pi} \frac{a}{\sqrt{a^2+z^2}} \cos\left(\omega t - k\sqrt{a^2+z^2}\right)\, da\, d\varphi \tag{4}$$

zunächst wird die Integration über φ durchgeführt:

$$p_A(z,t) = 4\pi\omega Z \int\limits_{a=0}^{\frac{D}{2}} \frac{a}{\sqrt{a^2+z^2}} \cos\left(\omega t - k\sqrt{a^2+z^2}\right)\, da \tag{5}$$

diese Integralgleichung wird algebraisch gelöst:

$$p_A(z,t) = -2\pi cZ \left\{ \sin\left(\omega t - k\sqrt{\left(\frac{D}{2}\right)^2 + z^2}\right) - \sin\left(\omega t - kz\right) \right\} \tag{6}$$

mit der Schallgeschwindigkeit c;
unter Verwendung der trigonometrischen Additionssätze wird dieser Term vereinfacht:

$$\sin x - \sin y = 2\cos\frac{x+y}{2}\ \sin\frac{x-y}{2}$$

$$
\begin{aligned}
p_A(z,t) &= -4\pi cZ \cos\frac{2\omega t - k\sqrt{\left(\frac{D}{2}\right)^2 + z^2} - kz}{2}\ \sin k\frac{\sqrt{\left(\frac{D}{2}\right)^2 + z^2} - z}{2}\\
&= -4\pi cZ \cos\frac{2\omega t - k\sqrt{\left(\frac{D}{2}\right)^2 + z^2} - kz}{2}\ \sin\frac{\pi}{\lambda}\left(\sqrt{\left(\frac{D}{2}\right)^2 + z^2} - z\right)
\end{aligned}
\tag{7 und 8}
$$

nur die zeitunabhängigen Extreme $p_{max}(z)$ des Schalldrucks $p_A(z,t)$ sind hier von Interesse, daher werden für den Cosinus-Term nur die Extremwerte verwendet und der Absolutwert des Sinus-Terms wird betrachtet:

$$p_{max}(z) = 4\pi cZ \left| \sin\frac{\pi}{\lambda}\left(\sqrt{\left(\frac{D}{2}\right)^2 + z^2} - z\right) \right| \tag{9}$$

als Nahfeldlänge N wird der Abstand vom Wandler bis zum letzten Schalldruckmaximum auf der akustischen Achse bezeichnet; die Extreme werden aus dem Argument des Sinusterms in Gleichung (9) abgeleitet; die Sinusfunktion hat ihre Extremwerte bei:

$$\frac{2n+1}{2}\,\pi \ \text{mit} \ n \in \mathbb{N}_0$$

$$(10)$$

daher wird folgender Term untersucht:

$$\frac{\pi}{\lambda}\left(\sqrt{\left(\frac{D}{2}\right)^2 + z^2} - z\right) = \frac{2n+1}{2}\,\pi \ \text{mit} \ n \in \mathbb{N}_0$$

$$\Rightarrow 2\sqrt{\left(\frac{D}{2}\right)^2 + z^2} = (2n+1)\lambda + 2z$$

$$(11)$$

Quadrieren der Gleichung und Auflösen nach z ergibt:

$$z = \frac{D^2 - (2n+1)^2\,\lambda^2}{4\,(2n+1)\,\lambda}$$

$$(12)$$

z ist demnach maximal, wenn der Term hinter dem Minuszeichen im Zähler und Nenner möglichst klein ist, d. h. für n=0, wonach $z_{max}$ = N gilt:

$$N = \frac{D^2 - \lambda^2}{4\,\lambda}$$

$$(13)$$

wendet man den Satz des Pythagoras auf das rechtwinklige Dreieck an, das aus dem halben Wandlerdurchmesser D/2, der Nahfeldlänge N und dem Randstrahl r gebildet wird, um die Länge des Randstrahls r bis zum Ende des Nahfelds zu berechnen, ergibt dies:

$$r^2 = N^2 + \left(\frac{D}{2}\right)^2$$

$$\Rightarrow r^2 = \left(\frac{D^2 - \lambda^2}{4\lambda}\right)^2 + \left(\frac{D}{2}\right)^2$$

$$\Rightarrow r^2 = \frac{(D^2 + \lambda^2)^2}{16\,\lambda^2}$$

$$\Rightarrow r = \frac{D^2 + \lambda^2}{4\,\lambda}$$

$$\Rightarrow r = \frac{D^2 - \lambda^2}{4\,\lambda} + \frac{\lambda}{2}$$

$$\Rightarrow r = N + \frac{\lambda}{2}$$

$$(14)$$

das heißt, dass der Laufzeitunterschied zwischen dem Zentralstrahl und dem Randstrahl am Ende des Nahfeldes bei Dauerschall genau λ/2 beträgt; da üblicherweise D >> λ gilt, ist die folgende Näherung für die Nahfeldlänge N anwendbar anstelle von Gleichung (13):

$$N \approx \frac{D^2}{4\lambda}$$

$$(15)$$

zum Berechnen des Schalldrucks auf der akustischen Achse für gepulsten Schall wird das für Dauerschall angewendete Integral (5) wie folgt modifiziert:

$$p_A(z,t) = 4\pi\omega Z \int_{a=0}^{\frac{D}{2}} e^{A\left(z-\sqrt{z^2+a^2}\right)^2} \frac{a}{\sqrt{a^2+z^2}} \cos\left(\omega t - k\sqrt{a^2+z^2}\right) \, da$$

$$(16)$$

die ausgewählte Gauß-Kurve bewegt sich zusammen mit dem Schall, wodurch ein Modell des Impulses erzeugt wird, diese Gleichung numerisch gelöst wird, der Faktor A verwendet wird, um die Bandbreite festzulegen, zur Lösung des Integrals wiederum die trigonometrischen Additionssätze verwendet werden, und demnach das obige Integral in zwei Integrale aufgeteilt wird:

$$p_A(z,t) = 4\pi\omega Z \cos(\omega t) \underbrace{\int_{a=0}^{\frac{D}{2}} e^{A\left(z-\sqrt{z^2+a^2}\right)^2} \frac{a}{\sqrt{a^2+z^2}} \cos\left(k\sqrt{a^2+z^2}\right) \, da}_{x_1}$$

$$+ 4\pi\omega Z \sin(\omega t) \underbrace{\int_{a=0}^{\frac{D}{2}} e^{A\left(z-\sqrt{z^2+a^2}\right)^2} \frac{a}{\sqrt{a^2+z^2}} \sin\left(k\sqrt{a^2+z^2}\right) \, da}_{x_2}$$

$$(17)$$

dies ergibt als Lösung von p(z,t) einen Term der Form:

$$F = x_1 \cos(\omega t) + x_2 \sin(\omega t)$$

$$(18)$$

die Werte von B und φ werden aus der folgenden Gleichung bestimmt:

$$x_1 \cos(\omega t) + x_2 \sin(\omega t) = B \sin(\omega t + \varphi)$$
$$\Rightarrow x_1 \cos(\omega t) + x_2 \sin(\omega t) = B \sin(\omega t) \cos(\varphi) + B \cos(\omega t) \sin(\varphi)$$

$$(19)$$

im Vergleich dazu folgt aus der letzten Gleichung:

$$x_1 = B \sin(\varphi)$$
$$x_2 = B \cos(\varphi)$$

$$(20)$$

daher gilt weiterhin Folgendes:

$$\frac{1}{x_1^2}\sin^2\varphi = \frac{1}{x_2^2}\left(1 - \sin^2\varphi\right)$$

$$\sin^2\varphi = \frac{x_1^2}{x_1^2 + x_2^2}$$

$$\sin\varphi = \pm\frac{x_1}{\sqrt{x_1^2 + x_2^2}}$$

$$B(z) = \pm\sqrt{x_1^2 + x_2^2}$$

$$(21)$$

somit kann der Schalldruck $p_A$ auf der akustischen Achse für jede Tiefe und für jeden Zeitpunkt t wie folgt angegeben werden:

$$p_A(z,t) = B(z)\sin(\omega t + \varphi)$$
$$(22)$$

da nur der maximale Schalldruck $p_{Amax}$ hier von Interesse ist, wird dieser erhalten aus:

$$p_{Amax} = |B(z)|$$ $$(23)$$

die Kurve für das Rückseitenecho $p_{rwe}(z,t)$ ergibt sich aus der Tatsache, dass der Ultraschall an der Rückseite total reflektiert wird und zum Wandler zurückkehrt, der Schall jedoch inzwischen die Distanz 2z zurückgelegt hat, weshalb Gleichung (16) entsprechend angepasst wird, sodass z durch 2z ersetzt wird:

$$p_{rwe}(z,t) = 4\pi\omega Z \int_{a=0}^{\frac{D}{2}} e^{A\left(2z - \sqrt{4z^2 + a^2}\right)^2} \frac{a}{\sqrt{a^2 + 4z^2}} \cos\left(\omega t - k\sqrt{a^2 + 4z^2}\right) da$$

$$(24)$$

dies stellt die Gleichung für das Rückseitenecho dar;

zur Berechnung der ERS-Kurven $p_{ksr}(z,t)$, wird angenommen, dass der Kreisscheibenreflektor mit dem berechneten Schalldruck p(z,t) auf der akustischen Achse im Abstand z vollflächig schwingt, werden nur die Abstände (kürzeste Laufzeit) zwischen dem Wandler und dem Kreisscheibenreflektor berücksichtigt, ergibt sich der empfangene Schalldruck demnach aus dem Doppelintegral über die Kreisscheibenoberfläche als Sender und über die Wandleroberfläche als Empfänger, wobei in diesem Fall der Schalldruck des Kreisscheibenreflektors für den Abstand von z bis 2z, d. h. die Laufzeit des Schalls, berücksichtigt werden muss, wobei dies nicht für den Term für den Abstand gilt, da der Schalldruck für den Hinweg $p_A(z)$ bereits in die Berechnung einbezogen ist und auf Proportionalitätsfaktoren verzichtet wird, wobei dann wiederum unter Verwendung der Additionstheoreme, folgendes Integral berechnet wird:

$$p_{ksr}(z,t) = p_A(z) \int_{x=0}^{\frac{D}{2}} \int_{y=0}^{\frac{D_{KSR}}{2}} e^{A\left(2z - \sqrt{4z^2 + z^2}\right)^2} \frac{x\,y}{\sqrt{x^2 + 4z^2}} \cos\left(\omega t - k\sqrt{x^2 + 4z^2}\right) dx\,dy$$

$$(25)$$

wobei

$D_{KSR}$: Durchmesser des Kreisscheibenreflektors

$p_A(z)$: maximaler Schalldruck auf der akustischen Achse im Abstand z

nach der Berechnung dieses Integrals für alle gewünschten ERS-Kurven, bei der zur Vereinfachung diverse Proportionalitätsfaktoren weggelassen wurden, werden die berechneten Kurven auf den richtigen Abstand zur Rückseitenechokurve verschoben; diese Überlegungen beziehen sich nur auf das Fernfeld, so dass sie auch für gepulsten Schall verwendet werden können,

infolgedessen erhält man eine Vielzahl von ERS-Kurven, die spezifisch für den verwendeten Sendewandler sind, da sie von den geometrischen Abmessungen D des Sendewandlers, der Sendefrequenz f und der Bandbreite B der erzeugten Impulse abhängen und zusammen mit der ebenfalls berechneten Rückseitenechokurve das sendewandlerspezifische AVG-Diagramm für gepulsten Schall bilden, welches auch im Nahfeld gültig ist und somit die Grundlage für eine reproduzierbare Bestimmung der äquivalenten Reflektorgröße ERS eines Fehlers/einer Ungänze (99) bildet, auch wenn diese im Nahfeld des verwendeten Ultraschallsendewandlers liegt.

9. Verfahren nach Anspruch 8, wobei die Ultraschallimpulse ein rotationssymmetrisches Schallfeld im Prüfling (100) erzeugen.

10. Verfahren nach Anspruch 8 oder 9, wobei die Ultraschallimpulse schräg in den Prüfling (100) eingeschallt werden.

11. Verfahren nach einem der Ansprüche 8 bis 10, wobei das AVG-Diagramm in Abhängigkeit von der Polarisation P der eingeschallten Ultraschallimpulse ermittelt wird.

12. Verfahren nach einem der Ansprüche 8 bis 11, wobei ein AVG-Diagramm in Form einer Funktion verwendet wird, die als Parameter (p) den Durchmesser DKSR eines Kreisscheibenreflektors enthält.

13. Verfahren nach Anspruch 12, wobei zur Ermittlung der äquivalenten Reflektorgröße ERS eines detektierten Fehlers/einer detektierten Ungänze (99) eine Anpassung der Funktion F bezüglich des Parameters p an experimentell ermittelte Echowerte des Fehlers/der Ungänze (99) durchgeführt wird.

14. Verfahren nach einem der Ansprüche 8 bis 13, wobei ein Hinweis für einen menschlichen Bediener generiert wird, wenn das aus einer Fehleranzeige ermittelte Verhältnis des Durchmessers D zur äquivalenten Reflektorgröße ERS unter einen vorgegebenen Schwellenwert fällt.

## Revendications

1. Dispositif (1) pour le test non destructif d'un objet de test (100) au moyen d'ultrasons, le dispositif (1) étant conçu pour la caractérisation de défauts ou de discontinuités (99) dans le matériau de l'objet de test (100) conformément à un procédé distance-gain-taille, DGS, qui sont situés dans le champ proche d'un transducteur ultrasonique (12) utilisé pour générer les ultrasons, dans lequel le dispositif (1) comprend ce qui suit :

a. une sonde de test ultrasonique (10) dotée d'un transducteur ultrasonique (12) pour la génération et le couplage d'un champ ultrasonique dans l'objet de test (100),

b. une unité de commande (20) pour la commande du capteur de test ultrasonique (10) de manière à ce que ce dernier génère des impulsions ultrasoniques avec une certaine largeur de bande B,

c. une unité de réception (30) pour l'enregistrement de signaux d'écho au moyen du capteur de test ultrasonique, et

d. une unité d'évaluation (40), qui est connectée à l'unité de réception (30) et conçue pour traiter les signaux d'écho enregistrés,

e. dans lequel l'unité d'évaluation (40) est conçue pour la détermination d'une taille équivalente de réflecteur ERS du défaut ou de la discontinuité (99), à partir de signaux d'écho reçus, en fonction d'un diagramme DGS dépendant de la largeur de bande déterminé en fonction des dimensions géométriques D du transducteur d'émission (12), de la fréquence d'émission F et de la largeur de bande B des impulsions ultrasonores insonifiées conjointement avec une courbe d'écho de face arrière calculée,

**caractérisé en ce que** la courbe d'écho de face arrière et les courbes ERS sont calculées comme suit :

détermination théorique de la pression sonore sur l'axe acoustique pour un son pulsé en fonction de considérations relatives à la pression sonore d'un transducteur d'émission circulaire avec le diamètre D pour un son continu, la pression sonore $p_A(z,t)$ à la distance z du transducteur à l'instant t étant calculée à l'aide de la formule suivante :

$$p_A(z,t) = \omega Z \int_S \frac{1}{r} \cos(\omega t - kr)\, dS$$

$$(1)$$

dans lequel :

ω : fréquence angulaire
Z : impédance acoustique
k : nombre d'ondes
S : surface du transducteur circulaire
et

$$r = \sqrt{z^2 + a^2} \quad \text{et} \quad k = \frac{2\pi}{\lambda}$$

$$dS \approx a\, da\, d\varphi$$

$$(2\ \&\ 3)$$

il s'ensuit que :

$$p_A(z,t) = 2\omega Z \int_{a=0}^{\frac{D}{2}} \int_{\varphi=0}^{2\pi} \frac{a}{\sqrt{a^2 + z^2}} \cos\left(\omega t - k\sqrt{a^2 + z^2}\right)\, da\, d\varphi$$

$$(4)$$

d'abord, l'intégration sur φ est réalisée :

$$p_A(z,t) = 4\pi\omega Z \int_{a=0}^{\frac{D}{2}} \frac{a}{\sqrt{a^2 + z^2}} \cos\left(\omega t - k\sqrt{a^2 + z^2}\right)\, da$$

$$(5)$$

cette équation intégrale est résolue algébriquement :

$$p_A(z,t) = -2\pi c Z \left\{ \sin\left(\omega t - k\sqrt{\left(\frac{D}{2}\right)^2 + z^2}\right) - \sin\left(\omega t - kz\right) \right\}$$

$$(6)$$

avec la vitesse du son c ;
en utilisant les théorèmes d'addition trigonométrique, ce terme est simplifié :

$$\sin x - \sin y = 2\cos \frac{x+y}{2} \ \sin \frac{x-y}{2}$$

$$p_A(z,t) = -4\pi cZ \cos \frac{2\omega t - k\sqrt{\left(\frac{D}{2}\right)^2 + z^2} - kz}{2} \ \sin k \frac{\sqrt{\left(\frac{D}{2}\right)^2 + z^2} - z}{2}$$

$$= -4\pi cZ \cos \frac{2\omega t - k\sqrt{\left(\frac{D}{2}\right)^2 + z^2} - kz}{2} \ \sin \frac{\pi}{\lambda} \left( \sqrt{\left(\frac{D}{2}\right)^2 + z^2} - z \right)$$

(7 et 8)

seules les valeurs extrêmes indépendantes du temps $p_{max}(z)$ de la pression sonore $p_A(z,t)$ nous intéressent ici. Par conséquent, seules les valeurs extrêmes sont utilisées pour le terme cosinus et la valeur absolue du terme sinus est prise en compte :

$$p_{max}(z) = 4\pi cZ \left| \sin \frac{\pi}{\lambda} \left( \sqrt{\left(\frac{D}{2}\right)^2 + z^2} - z \right) \right|$$

(9)

la distance entre le transducteur et le dernier maximum de pression sonore sur l'axe acoustique est appelée longueur de champ proche N ; les extrêmes sont dérivés de l'argument du terme sinus dans l'équation (9) ; la fonction sinusoïdale a ses extrêmes à :

$$\frac{2n+1}{2}\pi \text{ avec } n \in \mathbb{N}_0 \quad (10)$$

par conséquent, le terme suivant est examiné :

$$\frac{\pi}{\lambda} \left( \sqrt{\left(\frac{D}{2}\right)^2 + z^2} - z \right) = \frac{2n+1}{2}\pi$$
$$\text{avec } n \in \mathbb{N}_0$$
$$\Rightarrow 2\sqrt{\left(\frac{D}{2}\right)^2 + z^2} = (2n+1)\lambda + 2z$$

(11)

en élevant l'équation au carré et en la résolvant pour z, on obtient :

$$z = \frac{D^2 - (2n+1)^2 \lambda^2}{4(2n+1)\lambda}$$

(12)

ainsi, z est maximal lorsque le terme derrière le signe moins au numérateur et au dénominateur est aussi petit que possible, c'est-à-dire pour n=0, $z_{max} = N$ s'applique ;

$$N = \frac{D^2 - \lambda^2}{4\lambda}$$

(13)

le théorème de Pythagore est appliqué au triangle rectangle formé par la moitié du diamètre du transducteur D/2, la longueur du champ proche N et le rayon marginal r afin de calculer la longueur du rayon marginal r jusqu'à l'extrémité du champ proche, ce qui donne :

$$r^2 = N^2 + \left(\frac{D}{2}\right)^2$$

$$\Rightarrow \ r^2 = \left(\frac{D^2 - \lambda^2}{4\lambda}\right)^2 + \left(\frac{D}{2}\right)^2$$

$$\Rightarrow \ r^2 = \frac{(D^2 + \lambda^2)^2}{16\,\lambda^2}$$

$$\Rightarrow \ r = \frac{D^2 + \lambda^2}{4\,\lambda}$$

$$\Rightarrow \ r = \frac{D^2 - \lambda^2}{4\,\lambda} + \frac{\lambda}{2}$$

$$\Rightarrow \ r = N + \frac{\lambda}{2}$$

$$(14)$$

ce qui signifie que la différence de parcours entre le rayon central et le rayon marginal à l'extrémité du champ proche est exactement de $\lambda/2$ dans le cas d'un son continu ; étant donné qu'habituellement, D >> $\lambda$, l'approximation suivante pour la longueur du champ proche N peut être utilisée à la place de l'équation (13) :

$$N \approx \frac{D^2}{4\,\lambda}$$

$$(15)$$

pour le calcul de la pression sonore sur l'axe acoustique pour un son pulsé, l'intégrale (5) qui s'applique pour un son continu est modifiée comme suit :

$$p_A(z,t) = 4\pi\omega Z \int_{a=0}^{\frac{D}{2}} e^{A\left(z - \sqrt{z^2 + a^2}\right)^2} \frac{a}{\sqrt{a^2 + z^2}} \cos\left(\omega t - k\sqrt{a^2 + z^2}\right)\ da$$

$$(16)$$

la courbe gaussienne sélectionnée se déplace conjointement avec le son, ainsi, un modèle de l'impulsion est généré, cette équation étant résolue numériquement, le facteur A est utilisé pour définir la largeur de bande, les théorèmes d'addition trigonométrique étant à nouveau utilisés pour résoudre l'intégrale, ainsi, l'intégrale susmentionnée est divisée en deux intégrales :

$$p_A(z,t) = 4\pi\omega Z \cos(\omega t) \underbrace{\int_{a=0}^{\frac{D}{2}} e^{A\left(z - \sqrt{z^2 + a^2}\right)^2} \frac{a}{\sqrt{a^2 + z^2}} \cos\left(k\sqrt{a^2 + z^2}\right)\ da}_{x_1}$$

$$+ 4\pi\omega Z \sin(\omega t) \underbrace{\int_{a=0}^{\frac{D}{2}} e^{A\left(z - \sqrt{z^2 + a^2}\right)^2} \frac{a}{\sqrt{a^2 + z^2}} \sin\left(k\sqrt{a^2 + z^2}\right)\ da}_{x_2}$$

$$(17)$$

ce qui donne, comme solution de p(z,t), un terme de la forme :

$$F = x_1 \cos(\omega t) + x_2 \sin(\omega t) \tag{18}$$

les valeurs de B et $\varphi$ sont déterminées à partir de l'équation suivante :

$$x_1 \cos(\omega t) + x_2 \sin(\omega t) = B \sin(\omega t \mp \varphi)$$
$$\Rightarrow x_1 \cos(\omega t) + x_2 \sin(\omega t) = B \sin(\omega t)\,\cos(\varphi) + B \cos(\omega t)\,\sin(\varphi) \tag{19}$$

par comparaison, il découle de la dernière équation :

$$x_1 = B \sin(\varphi)$$
$$x_2 = B \cos(\varphi) \tag{20}$$

par conséquent, les dispositions suivantes continuent à s'appliquer :

$$\frac{1}{x_1^2} \sin^2 \varphi = \frac{1}{x_2^2} \left(1 - \sin^2 \varphi\right)$$
$$\sin^2 \varphi = \frac{x_1^2}{x_1^2 + x_2^2}$$
$$\sin \varphi = \pm \frac{x_1}{\sqrt{x_1^2 + x_2^2}}$$
$$B(z) = \pm \sqrt{x_1^2 + x_2^2} \tag{21}$$

ainsi, la pression sonore $p_A$ sur l'axe acoustique peut être donnée, pour toute profondeur et pour tout instant t, comme suit :

$$p_A(z,t) = B(z) \sin(\omega t + \varphi) \tag{22}$$

puisque seule la pression sonore maximale $p_{A\max}$ nous intéresse ici, elle est obtenue á partir de:

$$p_{A\max} = |B(z)| \tag{23}$$

la courbe de l'écho de face arrière $p_{rwe}(z,t)$ est obtenue en tenant compte du fait que les ultrasons sont totalement réfléchis sur la face arrière et reviennent vers le transducteur, toutefois, le son a maintenant parcouru la distance 2z, par conséquent, l'équation (16) est adaptée en conséquence de sorte que z soit remplacé par 2z :

$$p_{rwe}(z,t) = 4\pi\omega Z \int_{a=0}^{\frac{D}{2}} e^{A\left(2z - \sqrt{4z^2 + a^2}\right)^2} \frac{a}{\sqrt{a^2 + 4z^2}} \cos\left(\omega t - k\sqrt{a^2 + 4z^2}\right) \, da \tag{24}$$

ceci constitue l'équation de l'écho de face arrière ;

pour calculer les courbes ERS $p_{ksr}(z,t)$, on suppose que le réflecteur à disque circulaire oscille sur toute la surface avec la pression sonore calculée p(z,t) sur l'axe acoustique à la distance z, seules les distances avec le temps de parcours le plus court entre le transducteur et le réflecteur à disque circulaire sont prises en compte, la pression sonore reçue est alors obtenue de la double intégrale sur la surface du disque circulaire en tant qu'émetteur et sur la surface du transducteur en tant que récepteur, dans ce cas, le fait que la pression sonore du réflecteur à disque circulaire doit être calculée pour la distance de z à 2z, c'est-à-dire qu'il faut tenir compte de l'aller-retour du son, cela ne s'applique pas au terme pour la distance, car la pression sonore à l'aller $p_A(z)$ est déjà incluse dans le calcul, en renonçant aux facteurs de proportionnalité, l'intégrale suivante est alors calculée, toujours à l'aide des théorèmes d'addition :

$$p_{ksr}(z,t) = p_A(z) \int_{x=0}^{\frac{D}{2}} \int_{y=0}^{\frac{D_{KSR}}{2}} e^{A\left(2z - \sqrt{4z^2 + x^2}\right)^2} \frac{x\,y}{\sqrt{x^2 + 4z^2}} \cos\left(\omega t - k\sqrt{x^2 + 4z^2}\right)\, dx\, dy$$

**(25)**

où

$D_{KSR}$ : diamètre du réflecteur à disque circulaire

$p_A(z)$ : pression sonore maximale sur l'axe acoustique à la distance z

après le calcul de cette intégrale pour toutes les courbes ERS souhaitées, dans lesquelles divers facteurs de proportionnalité ont été supprimés à des fins de simplification, les courbes calculées sont décalées à la bonne distance de la courbe d'écho de face arrière ; ces considérations ne se rapportent qu'au champ lointain, de sorte qu'elles peuvent également être utilisées pour le son pulsé,

il en résulte qu'une pluralité de courbes ERS spécifiques au transducteur d'émission utilisé est obtenue, car elles dépendent des dimensions géométriques D du transducteur d'émission, de la fréquence d'émission f et de la largeur de bande B des impulsions générées, conjointement avec la courbe d'écho de face arrière, qui a également été calculée, elles forment le diagramme DGS spécifique au transducteur d'émission pour le son pulsé, qui s'applique également au champ proche, et constitue donc la base d'une détermination reproductible de la taille équivalente du réflecteur ERS d'un défaut/discontinuité (99), même si celui-ci se trouve dans le champ proche du transducteur d'émission ultrasonique utilisé.

2. Dispositif (1) selon la revendication 1, dans lequel le dispositif (1), en particulier la sonde d'essai (10), est conçu pour générer un champ sonore qui est symétriquement rotatif dans l'objet de test.

3. Dispositif (1) selon la revendication 1 ou 2, dans lequel la sonde de test (10) est conçue pour une insonification oblique dans l'objet de test (100).

4. Dispositif (1) selon l'une quelconque des revendications 1, 2 ou 3, dans lequel le diagramme DGS est déterminé en fonction de la polarisation P des impulsions ultrasonores insonifiées.

5. Dispositif (1) selon l'une quelconque revendication précédente, dans lequel le diagramme DGS est stocké dans l'unité d'évaluation (40) en tant que fonction F contenant le diamètre $D_{KSR}$ d'un réflecteur à disque circulaire en tant que paramètre (p).

6. Dispositif (1) selon l'une quelconque revendication précédente, dans lequel l'unité d'évaluation (40) est conçue pour générer une indication pour un opérateur humain si le rapport entre le diamètre D et la taille équivalente du réflecteur ERS, déterminé à partir d'une indication de défaut, tombe en dessous d'un seuil prédéfini.

7. Dispositif (1) selon la revendication 6, dans lequel le seuil est supérieur à 1/8, de préférence supérieur à 1/4, et particulièrement de préférence supérieur ou égal à 1/2.

8. Procédé pour le test non destructif d'un objet de test (100) au moyen d'ultrasons, le procédé servant à la caractérisation de défauts ou de discontinuités (99) dans le matériau de l'objet de test (100) conformément à un procédé DGS, à savoir, distance-gain-taille, qui sont situés dans le champ proche d'un transducteur ultrasonique (12) utilisé pour générer les ultrasons, dans lequel le procédé comprend les étapes de procédé suivantes :

a. couplage d'impulsions ultrasoniques d'une certaine largeur de bande B dans l'objet de test (100),

b. enregistrement de signaux d'écho provenant de l'objet de test (100),

c. détermination d'une taille équivalente de réflecteur ERS d'un défaut ou d'une discontinuité (99) provoquant les signaux d'écho enregistrés, à partir de signaux d'écho reçus, en fonction d'un diagramme DGS dépendant de la largeur de bande déterminé en fonction des dimensions géométriques D du transducteur d'émission (12), de la fréquence d'émission F et de la largeur de bande B des impulsions ultrasoniques insonifiées conjointement avec une courbe d'écho de face arrière calculée,

**caractérisé en ce que** la courbe d'écho de face arrière et les courbes ERS sont calculées comme suit :

détermination théorique de la pression sonore sur l'axe acoustique pour un son pulsé en fonction de considérations relatives à la pression sonore d'un transducteur d'émission circulaire avec le diamètre D pour un son continu, la pression sonore $p_A(z,t)$ à la distance z du transducteur à l'instant t étant calculée à l'aide de la formule suivante :

$$p_A(z,t) = \omega Z \int_S \frac{1}{r} \cos(\omega t - kr)\, dS$$

$$(1)$$

dans lequel :

$\omega$ : fréquence angulaire
Z : impédance acoustique
k : nombre d'ondes
S : surface du transducteur circulaire
et

$$r = \sqrt{z^2 + a^2} \quad \text{et} \quad k = \frac{2\pi}{\lambda}$$

$$dS \approx a\, da\, d\varphi$$

$$(2\ \&\ 3)$$

il s'ensuit que :

$$p_A(z,t) = 2\omega Z \int_{a=0}^{\frac{D}{2}} \int_{\varphi=0}^{2\pi} \frac{a}{\sqrt{a^2 + z^2}} \cos\left(\omega t - k\sqrt{a^2 + z^2}\right)\, da\, d\varphi$$

$$(4)$$

d'abord, l'intégration sur $\varphi$ est réalisée :

$$p_A(z,t) = 4\pi\omega Z \int_{a=0}^{\frac{D}{2}} \frac{a}{\sqrt{a^2 + z^2}} \cos\left(\omega t - k\sqrt{a^2 + z^2}\right)\, da$$

$$(5)$$

cette équation intégrale est résolue algébriquement :

$$p_A(z,t) = -2\pi c Z \left\{ \sin\left(\omega t - k\sqrt{\left(\frac{D}{2}\right)^2 + z^2}\right) - \sin\left(\omega t - kz\right) \right\}$$ (6)

avec la vitesse du son c ;
en utilisant les théorèmes d'addition trigonométrique, ce terme est simplifié :

$$\sin x - \sin y = 2\cos\frac{x+y}{2}\ \sin\frac{x-y}{2}$$

$$p_A(z,t) = -4\pi c Z \cos\frac{2\omega t - k\sqrt{\left(\frac{D}{2}\right)^2 + z^2} - kz}{2}\ \sin k\frac{\sqrt{\left(\frac{D}{2}\right)^2 + z^2} - z}{2}$$

$$= -4\pi c Z \cos\frac{2\omega t - k\sqrt{\left(\frac{D}{2}\right)^2 + z^2} - kz}{2}\ \sin\frac{\pi}{\lambda}\left(\sqrt{\left(\frac{D}{2}\right)^2 + z^2} - z\right)$$ (7 et 8)

seules les valeurs extrêmes indépendantes du temps $p_{max}(z)$ de la pression sonore $p_A(z,t)$ nous intéressent ici. Par conséquent, seules les valeurs extrêmes sont utilisées pour le terme cosinus et la valeur absolue du terme sinus est prise en compte :

$$p_{max}(z) = 4\pi c Z \left| \sin\frac{\pi}{\lambda}\left(\sqrt{\left(\frac{D}{2}\right)^2 + z^2} - z\right) \right|$$ (9)

la distance entre le transducteur et le dernier maximum de pression sonore sur l'axe acoustique est appelée longueur de champ proche N ; les extrêmes sont dérivés de l'argument du terme sinus dans l'équation (9) ; la fonction sinusoïdale a ses extrêmes à :

$$\frac{2n+1}{2}\pi \text{ avec } n \in \mathbb{N}_0 \quad (10)$$

par conséquent, le terme suivant est examiné :

$$\frac{\pi}{\lambda}\left(\sqrt{\left(\frac{D}{2}\right)^2 + z^2} - z\right) = \frac{2n+1}{2}\pi$$

avec $n \in \mathbb{N}_0$

$$\Rightarrow 2\sqrt{\left(\frac{D}{2}\right)^2 + z^2} = (2n+1)\lambda + 2z$$ (11)

en élevant l'équation au carré et en la résolvant pour z, on obtient :

$$z = \frac{D^2 - (2n+1)^2\,\lambda^2}{4\,(2n+1)\,\lambda}$$ (12)

ainsi, z est maximal lorsque le terme derrière le signe moins au numérateur et au dénominateur est aussi petit que possible, c'est-à-dire pour n=0, $z_{max} = N$ s'applique :

$$N = \frac{D^2 - \lambda^2}{4\,\lambda}$$

$$(13)$$

le théorème de Pythagore est appliqué au triangle rectangle formé par la moitié du diamètre du transducteur D/2, la longueur du champ proche N et le rayon marginal r afin de calculer la longueur du rayon marginal r jusqu'à l'extrémité du champ proche, ce qui donne :

$$r^2 = N^2 + \left(\frac{D}{2}\right)^2$$
$$\Rightarrow\ r^2 = \left(\frac{D^2 - \lambda^2}{4\lambda}\right)^2 + \left(\frac{D}{2}\right)^2$$
$$\Rightarrow\ r^2 = \frac{(D^2 + \lambda^2)^2}{16\,\lambda^2}$$
$$\Rightarrow\ r = \frac{D^2 + \lambda^2}{4\,\lambda}$$
$$\Rightarrow\ r = \frac{D^2 - \lambda^2}{4\,\lambda} + \frac{\lambda}{2}$$
$$\Rightarrow\ r = N + \frac{\lambda}{2}$$

$$(14)$$

ce qui signifie que la différence de parcours entre le rayon central et le rayon marginal à l'extrémité du champ proche est exactement de $\lambda/2$ dans le cas d'un son continu ; étant donné qu'habituellement, D >> $\lambda$, l'approximation suivante pour la longueur du champ proche N peut être utilisée à la place de l'équation (13) :

$$N \approx \frac{D^2}{4\,\lambda}$$

$$(15)$$

pour le calcul de la pression sonore sur l'axe acoustique pour un son pulsé, l'intégrale (5) qui s'applique pour un son continu est modifiée comme suit :

$$p_A(z,t) = 4\pi\omega Z \int_{a=0}^{\frac{D}{2}} e^{A\left(z - \sqrt{z^2 + a^2}\right)^2} \frac{a}{\sqrt{a^2 + z^2}} \cos\left(\omega t - k\sqrt{a^2 + z^2}\right)\,da$$

$$(16)$$

la courbe gaussienne sélectionnée se déplace conjointement avec le son, ainsi, un modèle de l'impulsion est généré, cette équation étant résolue numériquement, le facteur A est utilisé pour définir la largeur de bande, les théorèmes d'addition trigonométrique étant à nouveau utilisés pour résoudre l'intégrale, ainsi, l'intégrale susmentionnée est divisée en deux intégrales :

$$p_A(z,t) = 4\pi\omega Z\cos(\omega t) \underbrace{\int_{a=0}^{\frac{D}{2}} e^{A\left(z-\sqrt{z^2+a^2}\right)^2} \frac{a}{\sqrt{a^2+z^2}} \cos\left(k\sqrt{a^2+z^2}\right) da}_{x_1}$$

$$+ 4\pi\omega Z\sin(\omega t) \underbrace{\int_{a=0}^{\frac{D}{2}} e^{A\left(z-\sqrt{z^2+a^2}\right)^2} \frac{a}{\sqrt{a^2+z^2}} \sin\left(k\sqrt{a^2+z^2}\right) da}_{x_2}$$

$$(17)$$

ce qui donne, comme solution de p(z,t), un terme de la forme :

$$F = x_1\cos(\omega t) + x_2\sin(\omega t)$$

$$(18)$$

les valeurs de B et $\varphi$ sont déterminées à partir de l'équation suivante :

$$x_1\cos(\omega t) + x_2\sin(\omega t) = B\sin(\omega t + \varphi)$$
$$\Rightarrow x_1\cos(\omega t) + x_2\sin(\omega t) = B\sin(\omega t)\,\cos(\varphi) + B\cos(\omega t)\,\sin(\varphi)$$

$$(19)$$

par comparaison, il découle de la dernière équation :

$$x_1 = B\sin(\varphi)$$
$$x_2 = B\cos(\varphi)$$

$$(20)$$

par conséquent, les dispositions suivantes continuent à s'appliquer :

$$\frac{1}{x_1^2}\sin^2\varphi = \frac{1}{x_2^2}\left(1 - \sin^2\varphi\right)$$
$$\sin^2\varphi = \frac{x_1^2}{x_1^2 + x_2^2}$$
$$\sin\varphi = \pm\frac{x_1}{\sqrt{x_1^2 + x_2^2}}$$
$$B(z) = \pm\sqrt{x_1^2 + x_2^2}$$

$$(21)$$

ainsi, la pression sonore $p_A$ sur l'axe acoustique peut être donnée, pour toute profondeur et pour tout instant t, comme suit :

$$p_A(z,t) = B(z)\sin(\omega t + \varphi)$$

$$(22)$$

puisque seule la pression sonore maximale $p_{Amax}$ nous intéresse ici, elle est obtenue à partir de :

$$p_{Amax} = |B(z)|$$

$$(23)$$

la courbe de l'écho de face arrière $p_{rwe}(z,t)$ est obtenue en tenant compte du fait que les ultrasons sont totalement réfléchis sur la face arrière et reviennent vers le transducteur, toutefois, le son a maintenant parcouru la distance 2z, par conséquent, l'équation (16) est adaptée en conséquence, z est remplacé par 2z :

$$p_{rwe}(z,t) = 4\pi\omega Z \int_{a=0}^{\frac{D}{2}} e^{A\left(2z-\sqrt{4z^2+a^2}\right)^2} \frac{a}{\sqrt{a^2+4z^2}} \cos\left(\omega t - k\sqrt{a^2+4z^2}\right) da$$

$$(24)$$

ceci constitue l'équation de l'écho de face arrière ;

pour calculer les courbes ERS $p_{ksr}(z,t)$, on suppose que le réflecteur à disque circulaire oscille sur toute la surface avec la pression sonore calculée p(z,t) sur l'axe acoustique à la distance z, seules les distances (temps de parcours le plus court) entre le transducteur et le réflecteur à disque circulaire sont prises en compte, la pression sonore reçue est alors obtenue de la double intégrale sur la surface du disque circulaire en tant qu'émetteur et sur la surface du transducteur en tant que récepteur, dans ce cas, le fait que la pression sonore du réflecteur à disque circulaire doit être calculée pour la distance de z à 2z, c'est-à-dire qu'il faut tenir compte du déplacement du son, cela ne s'applique pas au terme pour la distance, car la pression sonore à l'aller $p_A(z)$ est déjà incluse dans le calcul, en renonçant aux facteurs de proportionnalité, l'intégrale suivante est alors calculée, toujours à l'aide des théorèmes d'addition :

$$p_{ksr}(z,t) = p_A(z) \int_{x=0}^{\frac{D}{2}} \int_{y=0}^{\frac{D_{KSR}}{2}} e^{A\left(2z-\sqrt{4z^2+x^2}\right)^2} \frac{x\,y}{\sqrt{x^2+4z^2}} \cos\left(\omega t - k\sqrt{x^2+4z^2}\right) dx\,dy$$

$$(25)$$

où

$D_{KSR}$ : diamètre du réflecteur à disque circulaire

$p_A(z)$ : pression sonore maximale sur l'axe acoustique à la distance z

après le calcul de cette intégrale pour toutes les courbes ERS souhaitées, dans lesquelles divers facteurs de proportionnalité ont été supprimés à des fins de simplification, les courbes calculées sont décalées à la bonne distance de la courbe d'écho de face arrière ; ces considérations ne se rapportent qu'au champ lointain, de sorte qu'elles peuvent également être utilisées pour le son pulsé,

il en résulte qu'une pluralité de courbes ERS spécifiques au transducteur d'émission utilisé est obtenue, car elles dépendent des dimensions géométriques D du transducteur d'émission, de la fréquence d'émission f et de la largeur de bande B des impulsions générées, conjointement avec la courbe d'écho de face arrière, qui a également été calculée, elles forment le diagramme DGS spécifique au transducteur d'émission pour le son pulsé, qui s'applique également au champ proche, et constitue donc la base d'une détermination reproductible de la taille équivalente du réflecteur ERS d'un défaut/discontinuité (99), même si celui-ci se trouve dans le champ proche du transducteur d'émission ultrasonique utilisé.

9. Procédé selon la revendication 8, dans lequel les impulsions ultrasoniques génèrent un champ sonore à symétrie de rotation dans l'objet de test (100).

10. Procédé selon la revendication 8 ou 9, dans lequel les impulsions ultrasoniques sont insonifiées obliquement dans l'objet de test (100).

11. Procédé selon l'une quelconque des revendications 8 à 10, dans lequel le diagramme DGS est déterminé en fonction de la polarisation P des impulsions ultrasoniques insonifiées.

12. Procédé selon l'une quelconque des revendications 8 à 11, dans lequel on utilise un diagramme DGS sous la forme d'une fonction qui contient le diamètre DKSR d'un réflecteur à disque circulaire comme paramètre (p).

13. Procédé selon la revendication 12, dans lequel un ajustement de la fonction F par rapport au paramètre p aux valeurs d'écho déterminées expérimentalement du défaut/de la discontinuité (99) est effectué pour déterminer la taille équivalente du réflecteur ERS d'un défaut/d'une discontinuité détecté(e) (99).

14. Procédé selon l'une quelconque des revendications 8 à 13, dans lequel une indication pour un opérateur humain est générée si le rapport entre le diamètre D et la taille équivalente du réflecteur ERS, déterminé à partir d'une indication de défaut, tombe en dessous d'un seuil prédéfini.

General DGS diagram

FIG. 1

Legend:
A - Standardized distance
G - Standardized reflector size
V - Gain in dB

EP 3 100 042 B1

Adapted DGS diagram: D = 10 mm, f = 2 MHz, c = 5.920 km/s, $l_V$ = 0.0mm

FIG. 2

EP 3 100 042 B1

FIG. 3

FIG. 4

Pulse : D = 10mm, f = 4 MHz, c = 5.92 km/s, A = -5.13

FIG. 5

FIG. 6

FIG. 7

FIG. 8

**EP 3 100 042 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130291640 A1
- US 5511425 A
- US 2011016979 A1
- WO 2010130819 A1

**Non-patent literature cited in the description**

- DGS curve evaluation applied to ultrasonic phased array testing. **CERTO et al.** NON-DESTRUCTIVE TESTING AND CONDITION MONITORING. BRITISH INSTITUTE OF NON-DESTR, 01 April 2010, vol. 52, 192-194